# EUROPEAN PATENT APPLICATION

(11) **EP 4 507 387 A1**
(43) Date of publication of application: **12.02.2025**
(21) Application number: 23190905.2
(22) Date of filing: 10.08.2023
(51) Int. Cl.: H04W 36/08

(54) **TCI STATE OPERATION FOR L1L2 TRIGGERED MOBILITY**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP); ZEINEDDINE, Khalid, 63225 Langen (DE); Li, Hongchao, 63225 Langen (DE)
(74) Representative: Grünecker Patent- und Rechtsanwälte PartG mbB

(57) **Abstract**

The present invention relates to a user equipment, UE, comprising the following. A transceiver of the UE receives configuration information for configuring a set of beam indicators, wherein the set of beam indicators includes at least one first beam indicator and at least one second beam indicator, wherein the at least one first beam indicator indicates one or more beams, which can be used for signal transmission and/or signal reception in a serving cell, which is serving the UE, and wherein the at least one second beam indicator indicates one or more candidate beams, which can be used for signal transmission and/or a signal reception after a cell-switch from the serving cell to a target candidate cell, which is one out of one or more candidates for participating in mobility for the UE. A processing circuitry of the UE configures the set of beam indicators obtained from the configuration information.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates for a base station central unit to perform improved mobility procedures.

One non-limiting and exemplary embodiment facilitates for a UE to perform improved mobility procedures. In an embodiment, the techniques disclosed here feature a user equipment, UE, comprising the following. A transceiver of the UE receives configuration information for configuring a set of beam indicators, wherein the set of beam indicators includes at least one first beam indicator and at least one second beam indicator, wherein the at least one first beam indicator indicates one or more beams, which can be used for signal transmission and/or signal reception in a serving cell, which is serving the UE, and wherein the at least one second beam indicator indicates one or more candidate beams, which can be used for signal transmission and/or a signal reception after a cell-switch from the serving cell to a target candidate cell, which is one out of one or more candidates for participating in mobility for the UE. A processing circuitry of the UE configures the set of beam indicators obtained from the configuration information.

In another embodiment, the techniques disclosed here feature a base station comprising the following. A processing circuitry of the base station generates configuration information for configuring a set of beam indicators, wherein the set of beam indicators includes at least one first beam indicator and at least one second beam indicator, wherein the at least one first beam indicator indicates one or more beams, which can be used for signal transmission and/or signal reception in a serving cell, which is serving a UE, and wherein the at least one second beam indicator indicates one or more candidate beams, which can be used for signal transmission and/or a signal reception after a cell-switch from the serving cell to a target candidate cell, which is one out of one or more candidates for participating in mobility for the UE. A transmitter of the base station transmits the configuration information.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied,
- **Fig. 2**: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates a split-gNB architecture, where a gNB is split into a gNB-central unit and one or more gNB-distributed units,
- **Fig. 7**: illustrates a simplified signaling diagram for an intra-DU lower-layer cell switch,
- **Fig. 8**: illustrates a several beams and the corresponding SSB index, SSB1-SSB8, and how the beams are transmitted by the gNB in a beam-sweeping manner,
- **Fig. 9**: illustrates an exemplary TCI state operation,
- **Fig. 10**: illustrates an exemplary MAC-CE message for activating a subset of TCI states,
- **Fig. 11**: illustrates another exemplary TCI state operation,
- **Fig. 12**: illustrates an exemplary and simplified structure of a UE and a gNB,
- **Fig. 13**: illustrates a structure of the UE according to an exemplary implementation of the first solution
- **Fig. 14**: illustrates a structure of the gNB according to an exemplary implementation of the first solution,
- **Fig. 15**: illustrates a flow diagram for the UE behavior and the base station behavior according to an exemplary implementation of the first solution,
- **Fig. 16**: illustrates a flow diagram for the UE behavior and the base station behavior according to an exemplary implementation of a second solution,
- **Fig. 17**: illustrates a first exemplary implementation of an improved beam indicator configuration operation and an improved beam indicator activation operation,
- **Fig. 18**: illustrates a second exemplary implementation of the improved beam indicator configuration operation and the improved beam indicator activation operation,
- **Fig. 19**: illustrates a third exemplary implementation of the improved beam indicator configuration operation and the improved beam indicator activation operation,
- **Fig. 20**: illustrates a fourth exemplary implementation of the improved beam indicator configuration operation and a beam indicator activation operation,
- **Fig. 21**: illustrates a first exemplary implementation of a MAC-CE message for activating a subset of beam indicators according to the second solution,
- **Fig. 22**: illustrates a second exemplary implementation of a MAC-CE message for activating a subset of beam indicators according to the second solution,
- **Fig. 23**: illustrates a third exemplary implementation of a MAC-CE message for activating a subset of beam indicators according to the second solution,
- **Fig. 24**: illustrates a flow diagram for the UE behavior and the base station behavior according to an exemplary implementation of a third solution,
- **Fig. 25**: illustrates a process diagram of an exemplary implementation of an improved beam indicating operation,
- **Fig. 26**: illustrates a first exemplary implementation for reallocating the activated beam indicators after a cell-switch, and

- **Fig. 27**: illustrates a second exemplary implementation for reallocating the activated beam indicators after a cell-switch.

### DETAILED DESCRIPTION

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

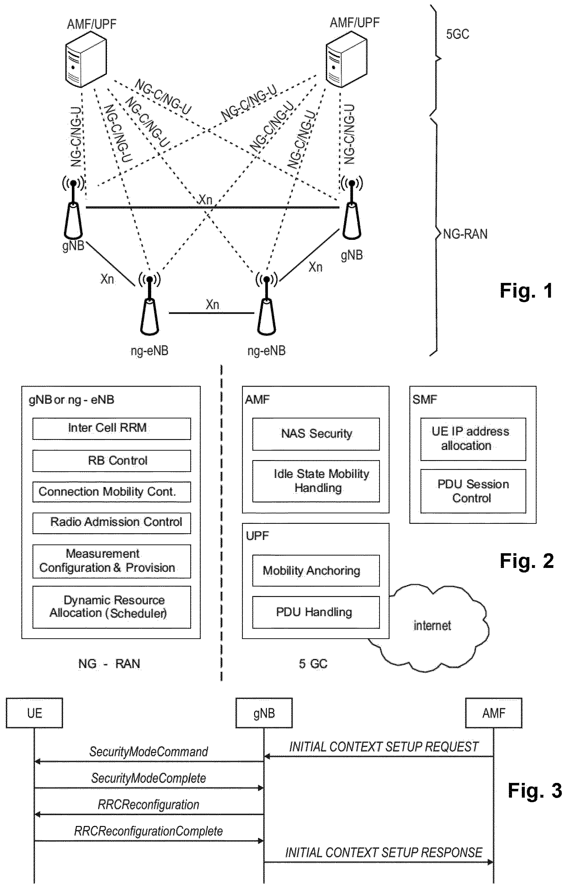

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 e.g., v17.2.0, section 4).

The user plane protocol stack for NR (see e.g., 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.4.0, e.g., section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

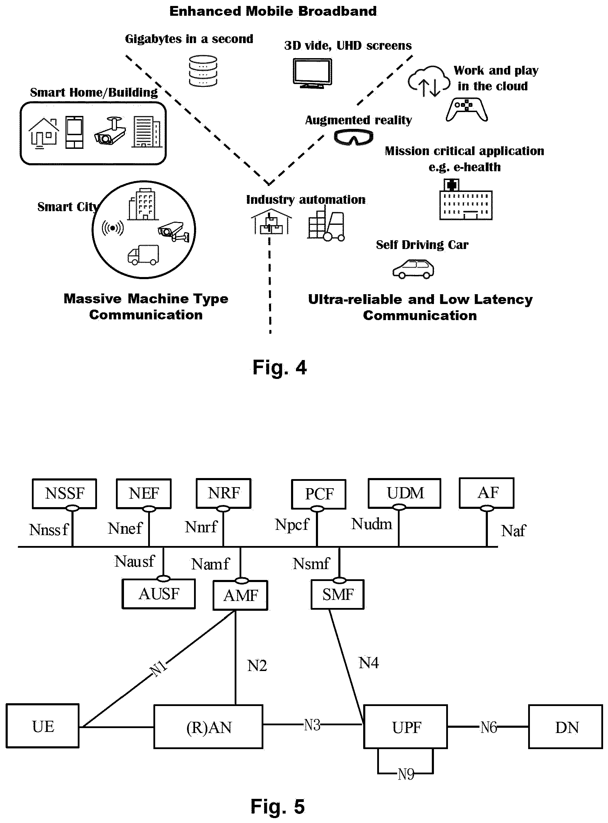

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig.** 5 illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Split gNB architecture

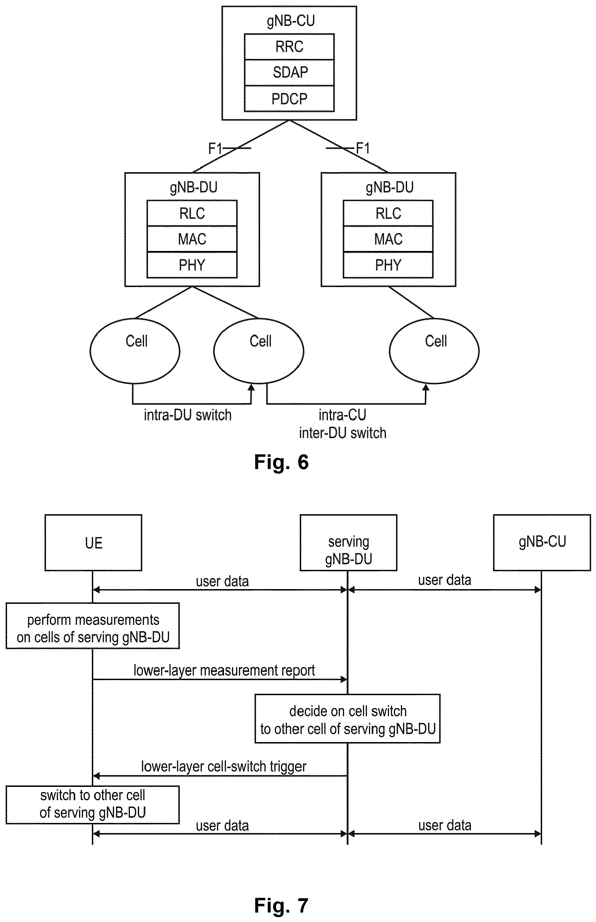

In the 3GPP standard, a gNB can be split into a gNB-CU (Central Unit) and one or more gNB-DUs (Distributed Units). This is illustrated in **Fig. 6****.**

The gNB-CU is a logical node that provides support for the higher layers of the protocol stack such as SOAP, PDCP and RRC. On the other hand, the gNB-DU is a logical node that provides support for the lower layers of the protocol stack such as RLC, MAC and Physical layer. Also, note that SDAP layer will not be present if the CU is connected to a 4G Core network as we should have 5G core network to support SOAP.

Therefore, the PHY and MAC layers are terminated at the gNB-DU, while Layer 3 (RRC) is terminated at the gNB-CU.

There is a single CU for each gNB, i.e. one gNB-DU is connected to only one gNB-CU. Alternatively, for resiliency, a gNB-DU may be connected to multiple gNB-CUs. One gNB-CU may control multiple gNB-DUs, for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1 and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v17.3.0, e.g. section 6.1. The F1 interface is specified in more detail e.g. in 3GPP TS 38.473 v17.3.0.

### Layer-1-Layer-2-triggered mobility (LTM)

When the UE moves from the coverage area of one cell to another cell, at some point a serving cell change needs to be performed. According to one possibility, serving cell change is triggered by L3 measurements and is done by RRC signalling triggered Reconfiguration with Synchronisation for change of PCell and PSCell, as well as release or add SCells when applicable. Such a procedure may involve complete L2 (and L1) resets, leading to longer latency, larger overhead and longer interruption time than beam switch mobility.

In the ongoing 3GPP Rel. 18 work on mobility enhancements, supporting Layer-1-Layer-2-(also termed lower-layer) triggered mobility (LTM) is one of the topics. The UE is firstly configured by the RRC (L3) with a set of candidate cells. Then, L1- or L2 signalling (e.g. a MAC CE (and/or possibly a DCI) is used to trigger the switch of the UE's serving cell among the candidate cells without RRC reconfiguration. Put differently, to facilitate a sequential cell switch, the cell switch shall be prepared in a manner that no RRC reconfiguration is needed for the UE after the cell switch, regardless of which candidate cell as a target candidate cell becomes the new serving cell. The goal is to reduce latency, overhead and interruption time for the serving cell change. Intra-DU and intra-CU inter-DU cells switches are both within the scope of Rel.18. **Fig. 6** illustrates the intra-DU switch between two cells of the same gNB-DU as well as the inter-DU switch between two cells of different gNB-DUs.

**Fig. 7** is a simplified and exemplary message exchange for an intra-DU lower-layer cell switch for according to the ongoing 3GPP Rel. 18 work. Correspondingly, it is exemplary assumed that the gNB-DU controls a plurality of cells, including the current serving cell of the UE. The gNB-DU is in connection with a gNB-CU.

As apparent therefrom, the cell switch is decided based on lower-layer (e.g. Layer 1 RSRP) measurements performed at the UE and reported to the gNB-DU. In more detail, the UE measures reference signals from one or more candidate cells of the gNB-DU and reports the results to the gNB-DU. The gNB-DU can use the received measurement results for determining whether to execute LTM to a candidate target cell or not. The lower-layer cell-switch trigger is transmitted to the UE, such that the UE can perform the switch from the current cell to another cell of the gNB-DU.

The benefit achieved by performing the measurement and reporting by Layer 1 is the low latency.

### Synchronization Signal Block - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.4.0 sections 7.4.2.2 and 7.4.2.3, including the respective sequence generation and mapping to physical resources.

The time-frequency structure of an SSB is described in the TS 38.211 section 7.4.3.1. In such an exemplary 5G implementation, in the time domain, an SSB consists of 4 OFDM symbols, numbered in an increasing order from 0 to 3. The distribution of the PSS, SSS and PBCH signals within the SSB is defined by Table 7.4.3.1-1.

In the frequency domain, an SSB consists of 240 contiguous subcarriers, indexed with 0 to 239. The exact subcarriers to be used for each PSS, SSS and PBCH signal within the SSB is also defined by Table 7.4.3.1-1.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

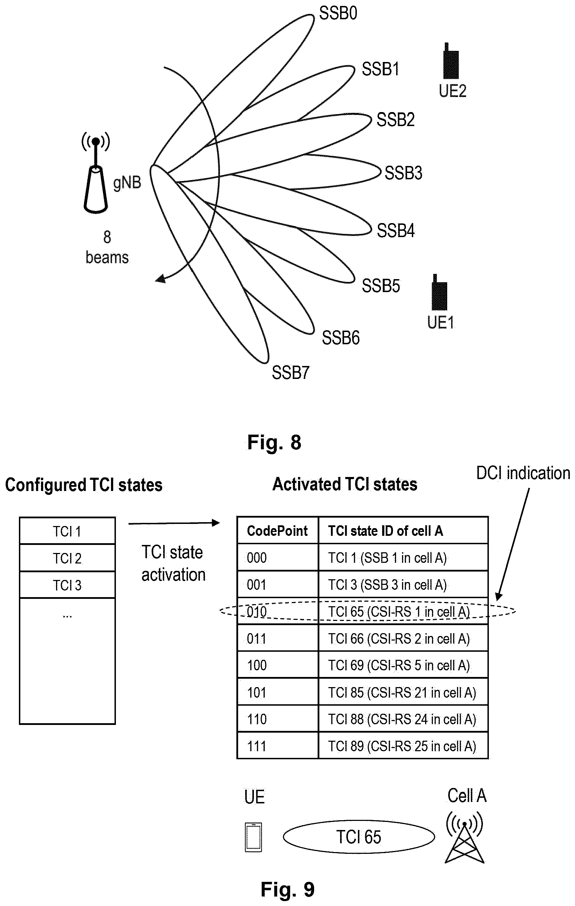

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 8****.** There are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Beam management

Beam management (BM) is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into three main procedures:
- initial beam establishment,
- beam adjustment (also called beam tracking and refining), and
- beam failure recovery.

### Transmission Configuration Indicator (TCI) states

Beam management in 5G NR has been employing a so-called Transmission Configuration Indication (TCI) signaling framework. That means that the beam for a target channel, like a PDSCH, PDCCH, or a target reference signal, like a channel state information reference signal (CSI-RS), can be indicated from a gNB to a UE by a specific TCI state, which is to be used by the UE for receiving the target channel or target signal. A TCI state defines parameters for configuring a quasi co-location (QCL) relationship between a source reference signal (RS) and the target channel or target signal. Accordingly, by measuring the source RS, the UE can set the reception coefficients (e.g. a spatial filter) and/or tune the reception antenna for the reception of the target channel/signal.

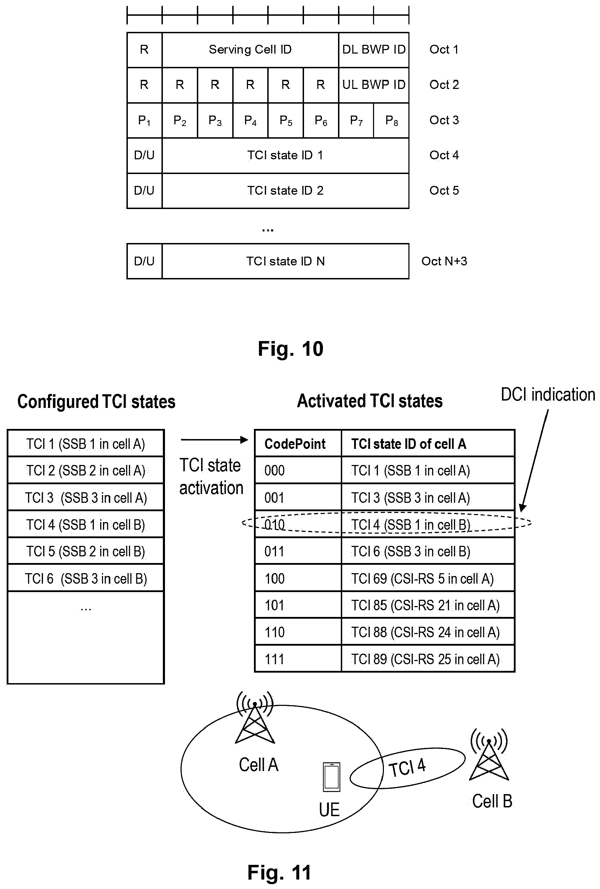

A TCI state operation, as for example illustrated in simplified form in **Fig. 9** and **Fig. 11****,** includes the following three steps:
- Step 1: The UE is configured by higher layer signaling (in particular RRC signaling) received from a gNB with a list of up to M TCI states depending on the UE capability.
- Step 2: The UE receives access control, MAC, control element, CE, message from the gNB for activating a subset of usually up to 8 TCI states among the preconfigured TCI states. Each activated TCI state is mapped by the UE to one codepoint of the DCI field *"Transmission Configuration Indication".*
- Step 3: The UE receives a DCI, which indicates one of the codepoints of the DCI field "*Transmission Configuration Indication*" and applies the indicated codepoint to the target channel(s) or target signal(s).

While in the above and following description, the TCI state operation will be mainly described for TCI states being applied to downlink target channels or downlink target reference signals, notably in Release 17, a unified TCI framework has been introduced, allowing a TCI state to be commonly applied to multiple channels/signals including also target uplink channels, like PUSCH or PUCCH, or target uplink reference signals, like a sounding reference signal (SRS) (See Section 11.1 of 3GPP TR 21.917 v17.0.1 "Summary of Rel-17 Work Items").

### Configuration of TCI states (TCI Configuration)

According to 3GPP TS 38.214, v. 17.6.0 (June 2023), a UE can be configured by higher layer signaling (in particular RRC signaling) with a list of up to *M TCI-State* configurations (see e.g. the lists on the left side of Fig. 9 and Fig. 11) within the higher layer parameter *PDSCH-Config* to decode PDSCH according to a detected PDCCH with DCI intended for the UE and the given serving cell. The number M of configured TCI states depends on the UE capability, and can, for example, be up to 128 TCI states for the PDSCH and up to 64 TCI states for the PDCCH. Each *TCI-State* contains parameters for configuring a quasi co-location relationship between one or two downlink reference signals and the DM-RS ports of the PDSCH, the DM-RS port of PDCCH or the CSI-RS port(s) of a CSI-RS resource.

Two antenna ports are said to be quasi co-located if properties of the channel over which a symbol on one antenna port is conveyed can be inferred from the channel over which a symbol on the other antenna port is conveyed.

In 5G NR systems, a transmission configuration indication (TCI) state is used to establish the quasi co-location (QCL) connection between a target reference signal (RS) and a source RS. The antenna ports QCL types are defined below:

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

TCI states are configured for PDCCH, PDSCH and channel state information reference signals (CSI-RS) in order to convey the QCL indication for the respective RS. In frequency range 1 (FR1, below 7.125 GHz) QCL Types A-C and in frequency range 2 (FR2, above 24.250 GHz) QCL types A-D are applicable. The QCLType D for FR2 indicates that PDCCH/PDSCH/CSI-RS is transmitted with the same spatial filter as the reference signal associated with that TCI. In FR2, the network can indicate a transmit beam change for PDSCH or PDCCH by switching the TCI state.

The IE *TCI-State,* as described in 3GPP TS 38.331, v. 17.5.0 (June 2023), Section 6.3.2, associates one or two DL reference signals with a corresponding quasi-colocation (QCL) type as following:

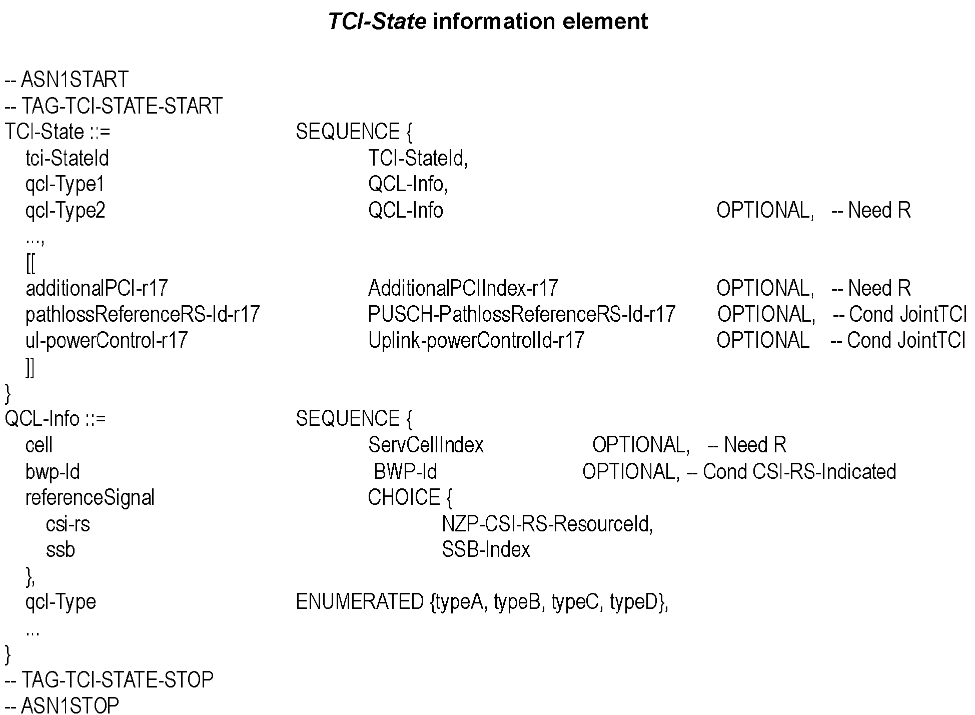

Accordingly, each TCI state can include a TCI state identifier, TCI state ID, and a RS set, or one or more individual RS(s), which are used for QCL reference. Each RS within a TCI state can be associated with a set of one or more Tx (transmit) and/or Rx (receive) beams. In present 3GPP 5G systems, TCI states are defined for two types of reference signals, the SSB (SS block) and the CSI-RS (Channel State Information-Reference Signals).

### Activation of TCI states (TCI Activation)

The UE receives a activation command by a MAC CE message, as described in clause 6.1.3.14 of 3GPP TS 38.321, v17.6.0 (June 23) for the TCI State activation/deactivation for UE-specific PDSCH, or as described in clause 6.1.3.47 of 3GPP TS 38.321, v17.6.0 (June 23) and shown in Fig. 10 for unified TCI state activation/deactivation.

In particular, in the MAC CE as shown in Fig. 10, the field Serving Cell ID indicates the identity of the Serving Cell for which the MAC CE applies, the fields DL BWP ID and UL BWP IB respectively indicate a DL or UL bandwidth part (BWP), for which the MAC CE applies, the fields Pᵢ indicate whether the ith TCI codepoint has multiple TCI states or single TCI state, the fields D/U indicate whether the TCI state ID in the same octet is for joint/downlink or uplink TCI state, and the fields TCI state ID indicates the identified TCI state (to be activated)

In accordance with the received MAC CE message, the UE activates a subset of up to 8 TCI states and/or pairs of TCI states, with one TCI state for DL channels/signals and/or one TCI state for UL channels/signals and maps the activated TCI states to the codepoints of the DCI field *'Transmission Configuration Indication'.* Exemplary mappings/associations between the activated TCI states and the codepoints are for example shown on the right side of Fig. 9 and Fig. 11 in the table listing the respective subset of the activated TCI states.

For each of the activated TCI states in the subset, the UE is required to perform tracking (see, e.g. parameter "tci-StatePDSCH" in TS 38.306, V17.5.0 (July 2023)). This basically means that UE performs measurement of the reference signals (e.g. SSB, or CSI-RS) associated with the corresponding active TCI states and updates its reception coefficients and/or transmission coefficients corresponding to the active TCI states. In other words, the UE prepares the necessary reception and/or transmission parameters corresponding to the active TCI states in order to shorten the beam (or TCI state) application time once the beam (or TCI state) is selected for transmission/reception by the gNB. Depending on the measurement and reporting configuration, the UE may report these measurements to the network (e.g. the serving gNB or the serving gNB-DU). Based on the received measurements, the network can then e.g. decide a suitable downlink Tx beam to the UE and/or a suitable uplink Tx beam from the UE.

The measurement and reporting can be e.g. based on the CSI reporting framework, which generally can be considered to involve two parts, one for configuration and another one for the triggering of the CSI reporting. Measurements and reporting can be carried out on a periodic, semi-periodic or aperiodic basis.

In release 17, there are two types of beam management supported, namely intra-cell beam management (illustrated in Fig. 9) and inter-cell beam management (illustrated in Fig.11). For intra-cell BM, all activated TCI states have source RS(s) in the serving cell serving the UE (e.g. cell A in Fig. 9). For inter-cell BM, the activated TCI states can also have TCI states (e.g. TCI states TCI4, TCI 5 and TCI 6 in Fig. 11) associated with source RS in a non-serving cell, not serving the UE (e.g. cell B in Fig. 11). Accordingly, inter-cell BM allows the UE to apply the parameters of a TCI state associated with a source RS (or in other words use a beam indicated by the TCI state) of a non-serving cell for receiving a target channel from the non-serving cell or transmitting a target channel to the non-serving cell without changing the serving cell (performing a cell-switch). In order to support inter-cell BM, the parameter "ServingAddtionaIPCllndex-r17" in the IE *TCI-State,* described above, provides the non-serving cell IDs to the SSB(s) associated with the configured TCI state. Details can be found in TS 38.331.

### Indication of TCI states (TCI Indication)

In DCI format 1-1 (section 7.3.1.2.2 of 3GPP TS 38.212 V17.5.0 (March 2023)) and in DCI format 1-2 (section 7.3.1.2.3 of 3GPP TS 38.212 V17.5.0 (March 2023)), which are used for PDSCH scheduling, there is included a field called "transmission configuration indication (TCI)" that is used to indicate one of the eight activated TCI states by using 3 bits, if configured. Notably, DCI format 1-1 or 1-2 used to indicate TCI can also be sent without scheduling any PDSCH. Flowingly, the UE applies the parameters of the indicated TCI state to the reception of downlink data, for example as shown in Fig. 10, the parameters of TCI state TCI 65 are applied, when the TCI field has the value 010. In other words, the UE uses the beam related to the one or more reference signals of the indicated TCI state for the reception of a downlink target channels (and/or for the transmission of an uplink target channel). For example, in Fig. 9, where TCI state 65 is indicated by a DCI with codepoint 010, the UE applies the parameters of TCI state 65 and transmits (or receives) a target channel with the same spatial filter as the reference signal CSI-RS 1 (of the serving cell A), which is associated with TCI 65. Similar, in Fig. 11, where TCI state 4 is indicated by a DCI with codepoint 010, the UE applies the parameters of TCI state 4 and transmits (or receives) a target channel with the same spatial filter as the reference signal SSB1 (of the non-serving cell B), which is associated with TCI 4.

### Further Improvements

As described above, in Rel. 18, in order to support mobility enhancement, Layer-1-Layer-2-(also termed lower-layer) triggered mobility (LTM) has been introduced, where L1- or L2 signalling (e.g. a MAC CE (and/or possibly a DCI) is used to trigger the switch of the UE's serving cell among candidate cells without RRC reconfiguration.

For further reducing the cell-switch latency by performing LTM, it has been agreed that the UE can be configured by higher layer signalling (e.g. RRC signalling) with a list of TCI states having source RS in the candidate cell(s). The configured TCI states having source RS(s) in the candidate cell(s) can be activated by a MAC CE before performing the switch from the current serving cell to a target candidate cell, so that UE can perform pre-synchronization to the target candidate cell using the activated TCI states. The cell-switch command can indicate one joint or one pair of UL and DL unified TCI state from the subset of activated TCI states for the UE to use in the target cell after performing the cell-switch.

In general, it could be an option to use the TCI states, which are configured for inter-cell BM, as TCI states for LTM candidate cells. However, the TCI states used for inter-cell BM are only defined for the same frequency band as the TCI states used for intra-cell BM (i.e. BM within the serving cell), in order to reduce the UEs complexity and power consumption, when activating the TCI states used for inter-cell BM. Further, with the present mechanism, inter-cell BM can only be configured for neighboring cells of the same gNB-DU.

On the other hand, the newly introduced mechanism for L1-L2-triggered mobility (LTM) should also allow switches between candidate cells of different gNB-DUs and should not be restricted in the same frequency band, e.g. same Bandwidth Part (BWP).

Accordingly, at least for L1-L2-triggered mobility (LTM) between different gNB-DUs, i.e. for inter-DU LTM and for L1-L2-triggered mobility (LTM) between cells with different frequency bands, it is unclear how the UE can be configured with TCI states or any other beam indicator, which indicates a beam to be used by the UE for transmission and/or reception in the candidate cell after performing the cell-switch, because the presently defined TCI states do not comprise parameters relating to such operation.

The inventors thus identified the possibility to define an improved beam indication operation for facilitating to avoid one or more of the above described disadvantages. The present invention relates to different solutions and variants for such an improved beam indication operation.

### Embodiments

In the following, UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

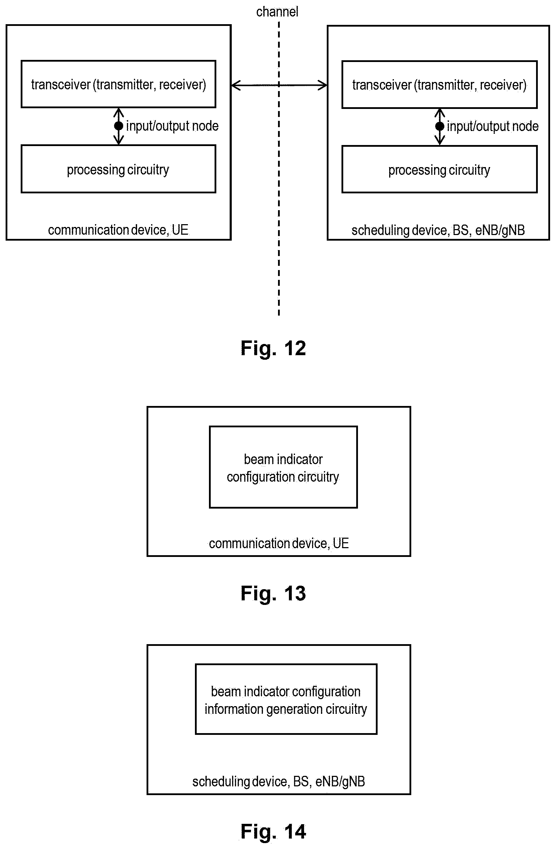

**Fig. 12** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present invention relates to different solutions (and respective variants) of an improved beam indication operation for Layer-1-Layer-2-triggered mobility.

In connection with these solutions, improved UEs, improved base stations and improved integrated circuits are presented, which participate separately or together in the improved beam indication operation. Corresponding methods for the UE behavior and the base station behavior are provided as well. The integrated circuits may correspond to the UE and base station, and respectively their behavior.

As an overview, according to a first solution, an improved beam indicator configuration operation is achieved, which either introduces a new type of beam indicators especially dedicated for LTM or extends the existing type of beam indicators (also signified beam indicators for BM), which have been presented above on the example of TCI states as beam indicators, to define the beam indicators dedicated for LTM.

Furthermore, a second solution provides an improved beam indicator activation operation, which introduces possibilities to unify the activation operation for the beam indicators for LTM with the existing activation operation for the beam indicators for BM.

A third solution is directed towards an improved beam indicator selection operation and introduces specific new mechanisms for selecting the beam indicators for LTM from a subset of beam indicators, which may comprise both the beam indicators for LTM and the (legacy) beam indicators for BM, and for applying the parameters indicated by the beam indicators for LTM.

Finally, a fourth solution introduces mechanisms for re-using the subset of actual activated beam indicators directly after a cell-switch in view of process efficiency and possible power-savings for the UE.

It should be noted that each of the First to Fourth Solutions provide independent solutions to specific operation steps of the existing beam indication operation, so that the First to Fourth Solutions especially in combination, but also individually contribute in providing the improved beam indication operation for Layer-1-Layer-2-triggered mobility. In other words, the improved beam indication operation for LTM is achieved, when implementing at least one of the First to Fourth Solutions presented below or when implementing any possible combination of the First to Fourth Solutions.

The following solutions can be based on some or a combination of the different mechanisms described above in context of the exemplary 3GPP 5G-NR implementations, including e.g. the use of the TCI operation mechanisms for indicating beams for BM (e.g. using information elements for TCI states), as currently defined in 3GPP. Furthermore, while, in the following solutions, TCI state indicators are used as exemplary implementation of beam indicators, which are used for indicating a beam, which can be used by a UE, to the UE, it should be kept in mind that alternatively or in addition a synchronization signal block identifier, SSB ID, and/or a reference signal resource identifier, RS ID may be used as the beam indicators described in the following.

### First solution - Beam indicator configuration

**Fig. 13** illustrates a simplified and exemplary UE structure according to a basic implementation underlying the first solution presented in more detail below. In one example, the UE structure can be implemented based on the general UE structure explained in connection with Fig. 12. The various structural elements of the UE illustrated in said Fig. 13 can be interconnected between one another e.g., with corresponding input/output nodes (not shown) e.g., in order to exchange control and user data and other signals. Although not shown for illustration purposes, the UE may include further structural elements.

As apparent from Fig. 13, the UE may include a beam indicator configuration circuitry, which in turn is able to configure a set of beam indicators obtained from received configuration information. In the present case as will become apparent from the below disclosure, the configuration information can include at least one second beam indicator, which can be used by the UE for signal transmission and/or a signal reception after a cell-switch from a serving cell to a target candidate cell, which is one out of one or more candidates for participating in mobility for the UE. In the present case as will become apparent from the below disclosure, the UE can thus be exemplarily configured with a newly introduced type of beam indicators, namely the second beam indicators, which to continue with a beam management operation of the UE directly after a LTM indicated cell-switch.

One exemplary procedure as will be disclosed in more detail further below is implemented by a UE that includes the following. A transceiver of the UE receives configuration information for configuring a set of beam indicators, wherein the set of beam indicators includes at least one first beam indicator and at least one second beam indicator. The at least one first beam indicator indicates one or more beams, which can be used for signal transmission and/or signal reception in a serving cell, which is serving the UE, and the at least one second beam indicator indicates one or more candidate beams, which can be used for signal transmission and/or a signal reception after a cell-switch from the serving cell to a target candidate cell, which is one out of one or more candidates for participating in mobility for the UE. Processing circuitry of the UE configures the set of beam indicators obtained from the configuration information.

The processing circuitry of the UE may implement more functionality than the above-mentioned configuring of the set of beam indicators, as it may, for instance, further control the transceiver to transmit or receive control signaling and/or to receive or transmit data by using a selected one of the configured beams and/or candidate beams.

A corresponding exemplary method comprises the following steps performed by a UE:
receiving configuration information for configuring a set of beam indicators, wherein the set of beam indicators includes at least one first beam indicator and at least one second beam indicator, wherein the at least one first beam indicator indicates one or more beams, which can be used for signal transmission and/or signal reception in a serving cell, which is serving the UE, and wherein the at least one second beam indicator indicates one or more candidate beams, which can be used for signal transmission and/or a signal reception after a cell-switch from the serving cell to a target candidate cell, which is one out of one or more candidates for participating in mobility for the UE, and configuring the set of beam indicators obtained from the configuration information.

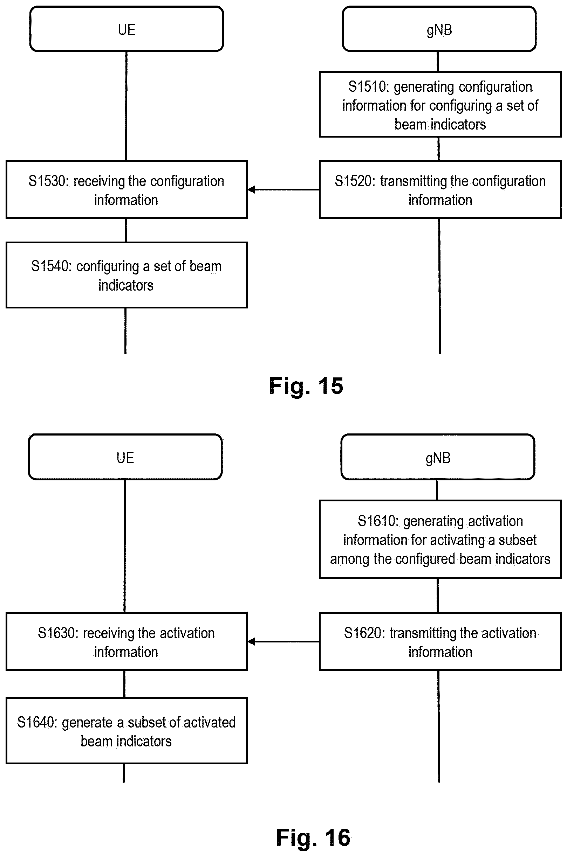

A corresponding sequence diagram for an exemplary UE behavior in line with the above-discussed UE and UE method is presented on the left side of **Fig. 15****.**

The above-described improved procedure thus achieves the object and overcomes some of the drawbacks explained above. In particular, the improved beam indicator configuration operation allows for configuring the UE with the at least one second beam indicator, which is a new type of beam indicator that indicates a beam, which can be used by the UE in a target candidate cell after performing an LTM cell-switch. In particular, the at least one second beam indicator can be associated with one or more beams in the target candidate cell, regardless whether the serving cell and the target candidate cells are cells of a same gNB-DU or of different gNB-DU and regardless of a frequency domain of the target candidate cell.

Some exemplary implementations of the improved beam indicating operation also involve improved base stations. Correspondingly, the improved beam indicating operation also provides improved base stations that participate therein, as will be explained in the following.

**Fig. 14** illustrates a simplified and exemplary base station structure according to an exemplary implementation of the improved beam indicating operation, which can be implemented based on the general base station structure explained in connection with Fig. 12. The various structural elements of the base station illustrated in said Fig. 14 can be interconnected between one another e.g., with corresponding input/output nodes (not shown) e.g., in order to exchange control and user data and other signals. Although not shown for illustration purposes, the base station may include further structural elements.

As apparent therefrom, the base station comprises a beam indicator configuration information generation circuitry.

In the present case as will become apparent from the below disclosure, the processing circuitry of the base station can thus be exemplarily configured to generates configuration information for configuring a set of beam indicators, wherein the set of beam indicators includes at least one second beam indicator, wherein the at least one second beam indicator indicates one or more candidate beams, which can be used for signal transmission and/or a signal reception after a cell-switch from the serving cell to a target candidate cell, which is one out of one or more candidates for participating in mobility for the UE, etc.

In the present case as will become apparent from the below disclosure, the transmitter of the base station can thus be exemplarily configured to transmit configuration information to the UE, etc.

One exemplary procedure as will be disclosed in more detail further below is implemented by a base station that includes the following. A processing circuitry of the base station generates configuration information for configuring a set of beam indicators, wherein the set of beam indicators includes at least one first beam indicator and at least one second beam indicator. The at least one first beam indicator indicates one or more beams, which can be used for signal transmission and/or signal reception in a serving cell, which is serving a UE, and the at least one second beam indicator indicates one or more candidate beams, which can be used for signal transmission and/or a signal reception after a cell-switch from the serving cell to a target candidate cell, which is one out of one or more candidates for participating in mobility for the UE. A transmitter of the base station transmits the configuration information.

The processing circuitry of the base station may implement more functionality than the above-mentioned configuring of the set of beam indicators, as it may, for instance, further control the transceiver to transmit or receive control signaling and/or to receive or transmit data from a UE, which uses a selected one of the configured beams and/or candidate beams.

A corresponding method comprises the following steps performed by the base station:
generating configuration information for configuring a set of beam indicators, wherein the set of beam indicators includes at least one first beam indicator and at least one second beam indicator, wherein the at least one first beam indicator indicates one or more beams, which can be used for signal transmission and/or signal reception in a serving cell, which is serving a UE, and wherein the at least one second beam indicator indicates one or more candidate beams, which can be used for signal transmission and/or a signal reception after a cell-switch from the serving cell to a target candidate cell, which is one out of one or more candidates for participating in mobility for the UE, and transmitting the configuration information.

A corresponding sequence diagram for an exemplary base station behavior in line with the above-discussed base station and corresponding method is illustrated on the right side of **Fig. 15****.** The sequence diagram illustrates an exemplary and simplified implementation of the above presented base station method.

For configuring the at least one beam indicator as a new type of beam indicator for LTM, the inventors of the present invention have found two possible solution, namely to configure the beam indicators for LTM with a separate ID space separately from the beam indicators for BM, as will be described in Example 1-1 below, or to configure the beam indicators for LTM by re-using the ID space of the beam indicators, as will be described in Example 1-2 below.

### Example 1-1 - separate beam indicator ID spaces

According to an exemplary implementation of the improved beam indicator configuration operation, the at least one first beam indicator is separately configured from the at least one second beam indicator.

In an exemplary implementation of Example 1-1, the UE can be configured with candidate TCI states for LTM by introducing an IE Candidate-*TCI*-State, which associates one or more source reference signals from a candidate cell for LTM with a candidate-TCI-state ID (identifier). Accordingly, in this implementation of Example 1-1, the candidate-TCI-state ID serves as second beam indicator, by identifying a beam, which is associated with one or more source reference signals of a candidate cell according to the IE Candidate-*TCI*-State.

For configuring the UE with TCI states for BM, the IE *TCI-State,* which has been described above, may be reused. In the IE *TCI-state,* the TCI-State ID serves as first beam indicator, by identifying a beam, which is associated with a source reference signals of the serving cell according to the IE *TCI-state.*

Exemplarily, the IE Candidate-*TCI*-State may define a relationship, between the candidate-TCI-state ID and the one or more source reference signals from the candidate cell for LTM as following:

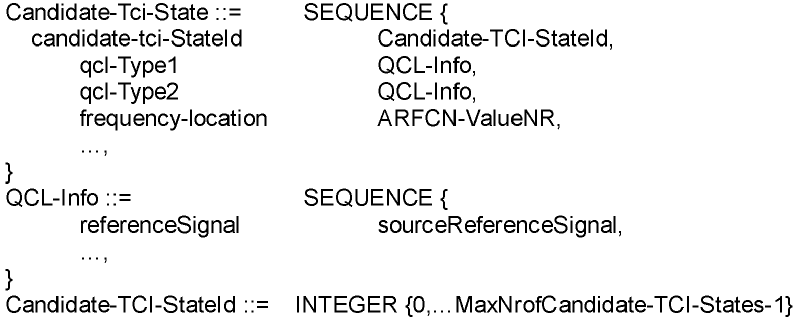

In this example, the IE Candidate-TCI-State comprises additional frequency domain information, which is not included in the IE *TCI-State* (described above), and allows to configure the UE with TCI states for LTM, which have a frequency band (e.g. BWP) different from the frequency band of the serving cell of the UE (so called "inter-frequency LTM"). In the example above, the frequency band of the candidate cell is indicated by using the parameter ARFCN-ValueNR, which is for example defined in 3GPP TS 38.104, V18.2 (June 2023) . Alternatively, it could be also possible to indicate the frequency band of the candidate cell by using one or more of the following param eters
- a candidate cell index, which identifies the candidate cell in the preconfigured set of candidate cells for LTM,
- a Physical Cell ID (PCI) of the candidate cell, or
- a Carrier indicator Field (CIF) value or ServCelllndex, in case that the candidate cell is one of the serving cells in carrier aggregation.

Beside indicating the frequency domain of the candidate cell in the IE Candidate-*TCI*-*State,* it is also possible in another exemplary implementation of the first example to indicate the frequency domain of the candidate cell separately by transmitting additional frequency information including one or more of the above-identified parameters for each candidate TCI-state, when transmitting the configuration information from the base station to the UE (in steps S1520 and S1530 of Fig. 15).

In Example 1-1 of the first solution, it is possible for both, the base station and the UE, to distinguish the at least one first beam indicator and the at least one second beam indicator by the different identifiers. In particular, in an exemplary implementation, the UE and the base station identify the a beam indicator as a first beam indicator by using a TCI state ID identifying a TCI state for BM, and identify a beam indictor as a second beam indicator by using a candidate TCI state ID identifying a candidate TCI state for LTM.

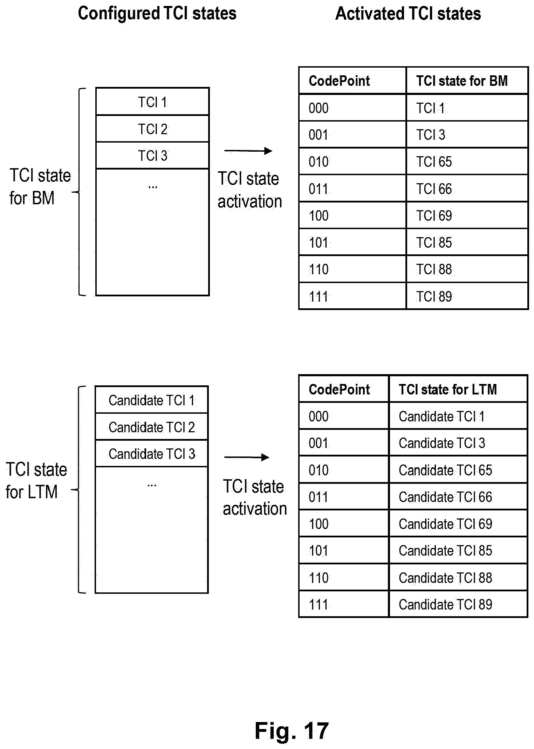

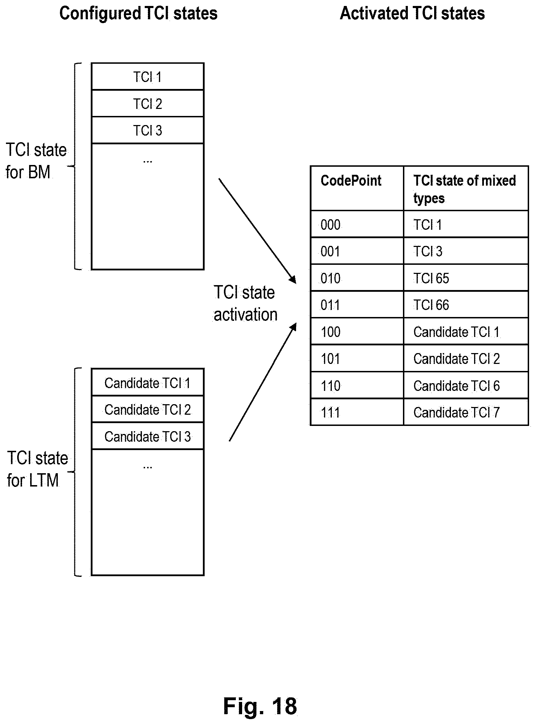

In another exemplary implementation of Example 1-1 of the first solution, the processing circuitry of the UE configures a first list listing the at least one first beam indicator included in the configured set of beam indicators, and separately configures a second list listing the at least one second beam indicator included in the configured set of beam indicators. In other words, the processing circuitry of the UE configures separate lists for the beam indicators for BM (i.e. beam management within the serving cell) and for the beam indicators for LTM (i.e. beam management after an LTM cell-switch). An example for such separate lists is illustrated on the left side of **Fig. 17** and **Fig. 18****,** where two lists of configured TCI states are shown. In both figures, the upper list of configured TCI states contains the configured TCI states for BM, which are identified by the TCI state ID (e.g. TCI 1, TCI 2, TCI 3... ,) as an example of first beam indicators. The lower list of configured TCI states contains the configured TCI states for LTM, which are identified by the candidate TCI state ID (e.g. Candidate TCI 1, Candidate TCI 2, Candidate TCI 3...) as an example of the second beam indicators. Notably, the TCI states for LTM in the second list may include TCI states for one or more candidate cells out of the preconfigured set of candidate cells for LTM.

By allowing to configure the UE with TCI states for BM and candidate TCI states for LTM separately, Example 1-1 of the first solution has the advantage to allow the UE and the base station to independently configure the UE with TCI states for BM and TCI states for LTM. In this manner, also a simple re-configuration of one of the TCI states for BM or the TCI states for LTM is possible without impacting the other one. For example, if the set of candidate cells for LTM is re-configured, the TCI states for LTM can be also re-configured without a possible impact on the configured TCI states for BM.

### Example 1-2 - shared beam indicator ID spaces

According to another exemplary implementation of the improved beam indicator configuration operation, the at least one first beam indicator and the at least one second beam indicator are jointly configured.

In an exemplary implementation of Example 1-2 of the first solution, the UE can be configured with TCI states for LTM by using the above described IE *TCI-State,* so that TCI states for BM and TCI states for LTM can be jointly configured by using a shared TCI state ID space. Accordingly, in this implementation of Example 1-2, the TCI state ID serves as second beam indicator, when identifying a beam, which is associated with one or more source reference signals of a candidate cell according to the IE *TCI-State.* Similar, the TCI state ID serves also as first beam indicator, when identifying a beam, which is associated with a source reference signals of the serving cell according to the IE *TCI-State.* In other words, in the exemplary implementation according to Example 1-2 both types of TCI states are using the same TCI state identifier.

Since the IE *TCI-State* does not comprise a field for indicating frequency domain information, the frequency band of a candidate cell, for which a TCI state for LTM is defined, can be provided to the UE indirectly through configuration of the source reference signal, which is associated with the respective TCI state for LTM. In an alternative or additional implementation the UE can be also informed of the frequency location of a TCI state for LTM by transmitting additional frequency information together with the configuration information from the base station to the UE (in steps S1520 and S1530 of Fig. 15). For example, the frequency information can indicate the frequency band of a TCI state for LTM by using one or more of the following parameters
- an ARFCN-ValueNR value, as for example defined in 3GPP TS 38.104, V18.2 (June 2023),
- a candidate cell index, which identifies the candidate cell, for which the TCI state for LTM is defined, in the preconfigured set of candidate cells for LTM,
- a Physical Cell ID (PCI) of the candidate cell, for which the TCI state for LTM is defined, or
- a Carrier indicator Field (CIF) value or ServCelllndex, in case that the candidate cell, for which the TCI state for LTM is defined, is one of the serving cells in carrier aggregation.

In Example 1-2 of the first solution, it is not possible to distinguish the at least one first beam indicator and the at least one second beam indicator by the identifiers, because a common identifier is used as the first beam identifier and the second beam identifier. Hence, in order to distinguish the first beam identifier and the second beam identifier, according to an exemplary implementation of Example 1-2, the at least one first beam indicator is identified by being indicated with an index in a first range of values, and the at least one second beam indicator is identified by being indicated with an index in a second range of values. In other words, the TCI state identifier as first beam identifier corresponding to TCI states for BM may take values in a first range (e.g. IDs from 1-64) and the second beam identifier corresponding to TCI states for LTM may take values in a second range (e.g. IDs from 65-128), which is different from the first range. Accordingly, the UE and the base station identify a beam indicator as a first beam indicator by using a value of the TCI state ID in the first range identifying a TCI state for BM and identify a beam indicator as a second beam indicator by using a value of the TCI state ID in the second range identifying a TCI state for LTM.

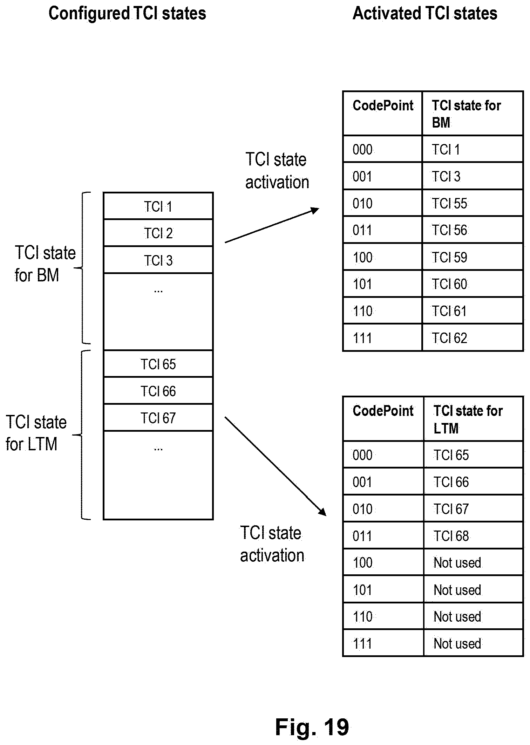

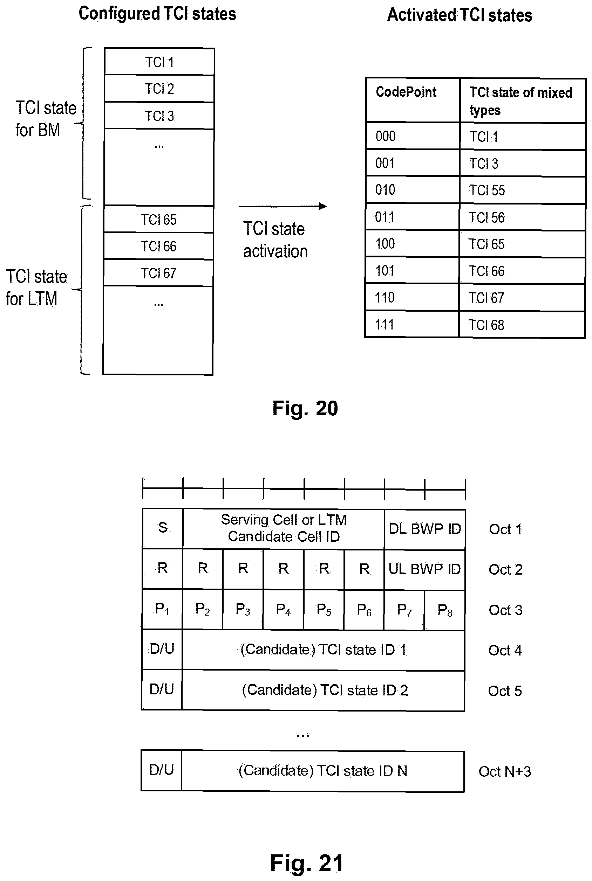

In another exemplary implementation of Example 1-2 of the first solution, the processing circuitry of the UE configures a common list for listing the at least one first beam indicator and the at least one second beam indicator included in the set of beam indicators. In other words, the processing circuitry of the UE configures a common list for the beam indicators for BM (i.e. beam management within the serving cell) and for the beam indicators for LTM (i.e. beam management after an LTM cell-switch). An example for such separate lists is illustrated on the left side of **Fig. 19** and **Fig. 20****,** where a common list of configured TCI states is shown. In both figures, the common list of configured TCI states contains the configured TCI states for BM (e.g. TCI 1, TCI 2, TCI 3..., TCI 64), which are identified by the TCI state ID having a value from 1-64 as an example of first beam indicators. In addition, the common list contains the configured TCI states for LTM (e.g. TCI 65, TCI 66, TCI 67,..., TCI 128), which are identified by the TCI state ID having a value from 65-128 as an example of the second beam indicator. Notably, the TCI states for LTM in the common list may include TCI states for one or more candidate cells out of the preconfigured set of candidate cells for LTM.

By allowing to configure the UE with TCI states for BM and candidate TCI states for LTM by using the same TCI state ID, the need for introducing a new configuration IE is dispensed. Accordingly, Example 1-2 of the first solution has the advantage to allow the UE and the base station to configure the UE with TCI states for BM and TCI states for LTM in a same configuration operation. In this manner, with the exemplary implementations of Example 1-2 of the first solution the beam indicator configuration operation can be kept simple and the processing efforts can be kept small even when extending the beam management procedure to TCI states for LTM.

### Second solution - Beam indicator activation

As presented above, the second solution is directed towards providing an improved beam indicator activation operation, which introduces possibilities to unify the activation operation for the beam indicators for LTM with the existing activation operation for the beam indicators for BM. Most favorable, the second solution provides beam indicator activation mechanisms for configured TCI states, which are configured in accordance with the different exemplary implementations of the improved beam indicator configuration operation according to the first solution. However, it should be also noted that the second solution can provide an independent improved beam indicator activation operation, even if the at least one first beam indicator and the at least one second beam indicator are configured in a different manner than described for the first solution.

**Fig. 16** illustrates a simplified an exemplary sequence diagram for an exemplary UE behavior (left side) and an exemplary base station behavior (right side) according to the second solution of the improved beam indicating operation. As illustrated in **Fig. 16****,** the beam indicator activation method performed by the base station comprises a step (S1610), which is performed by the processing circuitry of the base station, of generating activation information for activating one or more beam indicators out of the (pre)configured set of beam indicators, wherein the one or more beam indicators include at least one second beam indicator to be activated. Hereby, the set of beam indicators is preferably configured to the UE by one of the exemplary implementations of the first solution, but this is not a necessary condition for performing the beam indicator activation method, as long as the preconfigured list of beam indicators includes at least one second beam indicator, which can be used by the UE for transmission or reception after a cell-switch. After generating the activation information, the beam indicator activation method performed by the base station comprises a step (S1620), which is performed by the transmitter or transceiver of the base station, of transmitting the activation information to the UE.

A beam indicator activation method performed by a UE, comprises a step (S1630), which is performed by the receiver or transceiver of the UE, of receiving (by using the (transceiver or receiver of the UE) the activation information for activating one or more beam indicators out of the (pre)configured set of beam indicators, wherein the one or more beam indicators include at least one second beam indicator to be activated. After receiving the activation information, the beam indicator activation method performed by the UE comprises a step (S1640), which is performed by the processing circuitry of the UE, of generating a subset of activated beam indicators including the one or more beam indicators indicated in the activation information. Hereby the term "generating a subset of beam indicators" should be understood broadly to not only include that the subset is generated exclusively by the beam indicators specified in the activation information. Instead, it should include a new generation of the subset of activated beam indicators based on the activation information, as well as an updating an existing subset of activated beam indicators by including the beam indicators, which are newly activated by the activation information, into the existing subset and eventually de-activating some (but not all) of the previously activated beam indicators, if necessary.

In a general exemplary implementation of the second solution the subset of activated beam indicators includes (at least one) beam indicator for BM, in particular (at least one) TCI state for BM, as a first beam indicator, and (at least one) beam indicator for LTM, in particular (at least one) TCI states for LTM, as a second beam indicator in order to allow the base station and the UE to perform improved beam management for LTM while at the same time benefitting from the established beam management procedure in the serving cell. However, strictly speaking, for achieving the benefits of the improved beam indicator activation operation according to the second solution, it is not essential that a first beam indicator is activated, but only that at least one of the configured second beam indicators should is activated.

For each beam indicator included in the subset of activated beam indicators, the processing circuit is configured to prepare the beams and/or the candidate beams indicated by the activated beam indicators to be selected for signal transmission and/or signal reception, in order to reduce the processing time necessary for applying the parameters of the indicated beam after one of the activated beams is selected. As outlined above, this means that for each of the activated TCI states in the subset, the UE is required to perform tracking by performing measurement of the reference signals (e.g. SSB, or CSI-RS) associated with the corresponding active beam indicators (e.g. associated with TCI states) and updating its reception coefficients and/or transmission coefficients corresponding to the active beam indicators (e.g. associated with TCI states).

For this reason, the processing complexity and the power consumption for a UE is increased the more, the more beam indicators (TCI states) are activated, especially since activated beam indicators for LTM require the UE to perform measurement of the reference signals of candidate cells (different from the serving cell), potentially in a frequency band different from the frequency band of the serving cell. Accordingly, it is conceivable that the maximum number of activated beam indicators is specified as an UE capability in order to cap the maximum number of activated beams depending on the UE capability. Hereby, in a first exemplary implementation, the maximum number of activated beam indicators (indicated by activated TCI states) could be specified for each of beam indicators (TCI states) for intra-cell BM, beam indicators (TCI states) for inter-cell BM and beam indicators (TCI states) for LTM individually. In addition or as an alternative, it is also possible that the total number of activated beam indicators (TCI states), which includes a sum of the beam indicators (TCI states) for intra-cell BM, the beam indicators (TCI states) for inter-cell BM and the beam indicators (TCI states) for LTM, is defined as a UE capability.

In order to unify the activation operation for the beam indicators for LTM (TCI states for LTM) and for the beam indicators for BM (TCI states for BM), the base station may transmit the activation information in one or more medium access control, MAC, control element, CE, messages to the UE, so that the UE receives the activation information in the one or more MAC CE messages (compare to steps S1620 and S1630 of Fig. 16).

Similar as described for the improved beam indicator configuration operation of the first solution, also for the improved beam indicator activation operation of the second solution it is possible to perform the activation of the configured beams independently for the beam indicators (TCI states) for BM and for the beam indicators (TCI states) for LTM or in a joint activation operation.

In a first aspect of the improved beam activation operation according to the second solution, the processing circuitry of the UE generates a first subset of beam indicators, which includes all the activated first beam indicators and separately generates a second subset of beam indicators, which includes all the activated second beam indicators.

As will be described below, in a first optional implementation of the first aspect of the second solution, the processing circuitry, in operation, associates each of the activated first beam indicators included in the first subset with a codepoint for selecting the respective first beam indicator and separately associates each of the activated second beam indicators included in the second subset with a codepoint for selecting the respective second beam indicator. For example, each activated first beam indicator may be mapped by the UE to one codepoint of a DCI field, such as the DCI field "Transmission Configuration Indication". Similar, each activated second beam indicator is mapped by the UE to one codepoint of another DCI field, such as a newly introduced DCI field "Candidate Transmission Configuration Indication". By such implementation, one DCI can be used to select (indicate) both first and second beam indicators.

In an alternative implementation, the same DCI field as "Transmission Configuration Indication" may be used for mapping either the activated first beam indicators or the activated second beam indicators (but not both). A 1-bit field may be included in the DCI to indicate whether the "Transmission Configuration Indication" field applies to the activated first beam indicators or the activated second beam indicators. In this alternative implementation, the size of the DCI is smaller. But for selecting both first and second beam indicators, two DCls need to be transmitted.

For the first aspect of the second solution, it is in particular an advantageous option to implement that the activation information is received by the UE (or transmitted by the base station) in a first activation message specifying the at least one first beam indicator to be activated, and a second activation message, separate from the first activation message, specifying the at least one second beam indicator to be activated.

The first aspect of the second solution, which splits the beam indicator activation in separated operations for the first beam indicators and for the second beam indicators has especially the advantage that the activation of the beam indicators for BM can be performed independently from the activation of the beam indicators for LTM. In this manner, one of the subset of activated beam indicators for BM and the subset of activated beam indicators for LTM can be modified by a new activation information without impacting the other subset.

Alternatively, in a second exemplary aspect of the improved beam activation operation according to the second solution, the processing circuitry, in operation generates a joint subset of beam indicators, which includes all the activated first beam indicators and all the activated second beam indicators.

As will be described below, in an advantageous optional implementation of the second aspect of the second solution, the processing circuitry, in operation, associates each of the activated beam indicators included in the joint subset with a codepoint for selecting the respective beam indicators. For example, in the advantageous optional implementation each activated beam indicator, including the first beam indicators and the second beam indicators, is mapped by the UE to one codepoint of a DCI field, such as the DCI field "Transmission Configuration Indication".

For the second aspect of a joint activation operation for both types of beam indicators, it is also possible it is in particular an option to implement that the activation information is received in a single activation message, which specifies the at least one first beam indicator to be activated and the at least one second beam indicator to be activated.

The second aspect of the second solution, which uses a joint beam indicator activation for the first beam indicators and for the second beam indicators has especially the advantage that that an overhead of control information received by the UE can be reduced, since the beam indicator activation can be performed for beam indicators for BM and for beam indicators for LTM with a single MAC CE message. Furthermore, it is possible to reuse the TCI indication, which has already been defined for selecting TCI states for BM in the serving cell, also for selecting TCI states for LTM for a candidate cell.

By applying either the separated beam indicator activation of the first aspect of the second solution or the joint beam indicator activation of the second aspect of the second solution to Example 1-1 (separate beam indicator configuration) or to Example 1-2 (shared beam indicator configuration) of the first solution, there are four possible exemplary implementations, which will be described in the following as Examples 2-1 to 2-4 of the second solution.

### Example 2-1 - separate beam indicator activation for separate beam indicator ID spaces

**Fig. 17** shows an exemplary implementation of combining a separate beam indicator activation with a separate beam indicator configuration. As described for Example 1-1, in the exemplary implementation of Fig. 17 the UE has been configured with two separate lists of configured TCI states. The upper list of configured TCI states contains the configured TCI states for BM, which are identified by the TCI state ID (e.g. TCI 1, TCI 2, TCI 3...) as an example of first beam indicators. The lower list of configured TCI states contains the configured TCI states for LTM, which are identified by the candidate TCI state ID (e.g. Candidate TCI 1, Candidate TCI 2, Candidate TCI 3...) as an example of the second beam indicator. For activating TCI states from each of the lists of configured TCI states, the UE receives separate activation information for the TCI states for BM and for the TCI states for LTM and accordingly generates a first subset of activated TCI states for BM (e.g. 8 "TCI" states in the upper list on the right side of Fig. 17) and independently generates a second subset of activated TCI states for LTM (e.g. 8 "candidate TCI" states in the lower list on the right side of Fig. 17).

In a preferable implementation of Example 2-1, the activation information for activating the TCI states for BM is received by the UE in one or more first MAC CE messages, and the activation information for activating the TCI states for LTM is separately received by the UE in one or more second MAC CE messages.

In the first implementation of Example 2-1, the same design of MAC CEs may be used for separately activating TCI states for BM and for activating TCI states for LTM. Hereby, a 1-bit flag may be used to indicate whether the MAC CE carries activation information for the TCI states for BM or activation information for the TCI states for LTM. An exemplary MAC CE, which may be newly defined for the TCI state activation of the first implementation of Example 2-1 is shown in **Fig. 21****.** The exemplary MAC CE for the first implementation of Example 2-1 comprises the following fields:
- Afield "S" as the 1-bit flag, which indicates to which of the list of RRC configured TCI states the MAC CE applies. If "S" = 1, it applies to the TCI states for BM, i.e. the TCI states identified by the TCI-State ID. If "S"= 0, it applies to the Candidate TCI states identified by the Candidate-TCI-State ID,
- a field "Serving Cell or LTM Candidate Cell ID" , which indicates the identity of a serving cell or an LTM candidate cell, for which the MAC CE applies,
- "Pi" fields, which are similar defined as for the "legacy" MAC CE of Fig. 10 and indicate whether each TCI codepoint has multiple TCI states or a single TCI state. If the "Pi" field is set to 1, the i-th TCI codepoint includes the DL TCI state and the UL TCI state. If the "Pi" field is set to 0, the i-th TCI codepoint includes only the DL/joint TCI state or the UL TCI state. The codepoint to which a TCI state is mapped is determined by its ordinal position among all the TCI state ID fields,
- "D/U" fields, which are similar defined as for the "legacy" MAC CE of Fig. 10 and indicate whether the TCI state ID or Candidate TCI state ID in the same octet is for a joint/downlink or an uplink TCI state. If this field is set to 1, the (Candidate) TCI state ID in the same octet is for joint/downlink. If this field is set to 0, the (Candidate) TCI state ID in the same octet is for uplink, and
- Fields "(Candidate) TCI state ID", which if "Si"=1, indicates a TCI state identified by the TCI-State ID. If "Si"=0, the field indicates a candidate TCI state identified by the Candidate-TCI-State ID.

Further, although not needed for the improved TCI state activation operation, there could be provided, same as the "legacy" MAC CE "DL BWP ID" and "UL BWP ID", which if S="1", these fields indicate a DL BWP and a UL BWP for which this MAC CE applies or can be ignored if S="0", these two fields can be ignored, and reserved bits "R".

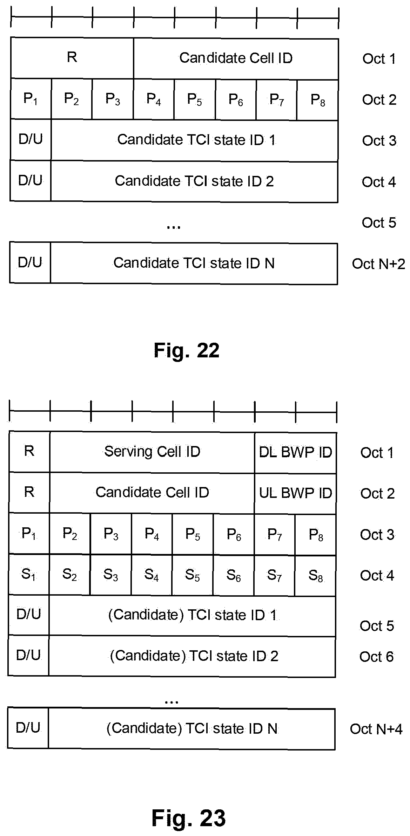

In an alternative implementation of Example 2-1, different types of MAC CEs may be used for activating TCI states for BM and for activating TCI states for LTM. For example, for activating TCI states for BM the existing MAC CE shown in Fig. 10 can be used, since in Example 2-1 the activation of TCI states for BM is independent from the newly introduced activation of TCI states for LTM. An exemplary MAC CE, which can be newly defined for the TCI state activation of the alternative implementation of Example 2-1 is shown in **Fig. 22****.** The exemplary MAC CE of the alternative implementation comprises the following fields:
- A field "Candidate cell ID", which indicates the identity of an LTM candidate cell, for which the MAC CE applies. For example, 5 bits are used for this fields, but also another bit number is possible depending on application scenarios,
- "Pi" fields and "D/U" fields, which are defined as for the "legacy" MAC CE (shown in Fig. 10) and the exemplary MAC CE defined for the first implementation of Example 2-1 (shown in Fig. 21),
- "Candidate TCI state ID" fields, which indicate a candidate TCI state identified by the Candidate-TCI-State ID.

Further, if necessary the exemplary MAC CE of the alternative implementation can also comprise reserved bits "R".

By combining the separated beam indicator activation with the separate beam indicator configuration, Example 2-1 of the second solution has the advantage that beam indicator operations for BM and for LTM can be operated independently in terms of both configuration and activation, so that e.g. configured and/or activated LTM related beam indicators can be released without impact on the configured and/or activated beam indicators for BM and vice versa.

### Example 2-2 - combined beam indicator activation for separate beam indicator ID spaces

**Fig. 18** shows an exemplary implementation of combining a joint beam indicator activation with a separate beam indicator configuration. As described for Example 1-1, in the exemplary implementation of Fig. 18 the UE has been configured with two separate lists of configured TCI states. The upper list of configured TCI states contains the configured TCI states for BM, which are identified by the TCI state ID (e.g. TCI 1, TCI 2, TCI 3...) as an example of first beam indicators. The lower list of configured TCI states contains the configured TCI states for LTM, which are identified by the candidate TCI state ID (e.g. Candidate TCI 1, Candidate TCI 2, Candidate TCI 3,) as an example of the second beam indicator. For activating TCI states from the configured lists, the UE receives joint activation information for the TCI states for BM and for the TCI states for LTM and accordingly generates a joint (or common) subset of activated TCI states for BM (e.g. 4 "TCI" states in the list of activated TCI states in Fig. 18) and of activated TCI states for LTM (e.g. 4 "candidate TCI" states in the list of activated TCI states in Fig. 18).

In a first implementation of Example 2-2, the activation information for activating the TCI states for BM is received by the UE in one or more joint activation messages, which may specify both TCI states to be activated for BM and TCI states to be activated for LTM in a single activation message. For this purpose, in the first implementation of Example 2-2, one MAC CE may be used to for transmitting the activation information, which allows the UE to generate the joint list of activated TCI states of Fig. 18. Hereby an 8-bit field in the MAC CE may be used to indicate whether each of the activated TCI states is for BM or is for LTM. An exemplary MAC CE, which can be newly defined for the TCI state activation of the first implementation of Example 2-2 is shown in **Fig. 23****.** The exemplary MAC CE defined for the first implementation comprises the following fields:
- "Si" fields, which indicate for each codepoint the reference List of TCI states. If "Si" = 1, it refers to the TCI states identified by the TCI-State ID. If "Si" = 0, it refers to the Candidate TCI states identified by the Candidate-TCI-State ID,
- Field "Serving Cell ID" and "LTM Candidate Cell ID", which indicate the identity of a serving cell and an LTM candidate cell for which the MAC CE applies.
- Fields "DL BWP ID" and UL BWP ID, which indicate a DL BWP and a UL BWP, for which the TCI states identified by TCI-State IDs apply,
- "Pi" fields and "D/U" fields, which are defined as for the "legacy" MAC CE (shown in Fig. 10) and the exemplary MAC CE defined for the first implementation of Example 2-1 (shown in Fig. 21), and
- Fields "(Candidate) TCI state ID", which if "Si"=1, indicate TCI states identified by the TCI-State ID. If "Si"=0, the fields indicate candidate TCI states identified by the Candidate-TCI-State ID.

Further, if necessary the exemplary MAC CE of the first implementation of Example 2-2 can also comprise reserved bits "R".

In a second implementation of Example 2-2, alternative to the first implementation, similar as in Example 2-1, the activation information for activating the TCI states for BM is received by the UE in one or more first MAC CE messages, and the activation information for activating the TCI states for LTM is separately received by the UE in one or more second MAC CE messages. Hereby, for example the two implementations described in Example 2-1 can be used. The activated TCI states and candidate TCI states can be mapped to the codepoint of the DCI as described in the following two option. In option 1, the (candidate) TCI states indicated in the MAC CE received first in time order activates the subset of codepoints, starting from "000", and the (candidate) TCI states indicated in the MAC CE received second in time order then activates the rest of the codepoints. In option 2, an 8-bit bitmap in the MAC CE is used to indicate to which codepoint(s) the (candidate) TCI states indicated in the MAC CE are mapped. For example, a bitmap "11100000" indicates that the last 3 codepoints (101, 110, 111) will be modified by the (candidate) TCI states indicated in the MAC CE.

By combining the joint beam indicator activation with the separate beam indicator configuration, Example 2-2 of the second solution has the advantage that beam indicator configuration for BM and for LTM can be operated independently, while it is possible to unify the beam indicator activation operation. At the same time, it is possible to reduce the control information overhead, since the beam indicators for BM and for LTM can be activated with a single MAC CE message. Further, the joint subset makes it possible to use a DCI indication as already defined for beam indicators for BM.

### Example 2-3 - separate beam indicator activation for shared beam indicator ID spaces

**Fig. 19** shows an exemplary implementation of combining a separate beam indicator activation with a joint beam indicator configuration. As described for Example 1-2, in the exemplary implementation of Fig. 19 the UE has been configured with a common list of configured TCI states. The common list of configured TCI states contains the configured TCI states for BM (e.g. TCI 1, TCI 2, TCI 3..., TCI 64), which are identified by the TCI state ID having a value from 1-64 as an example of first beam indicators. In addition, the common list contains the configured TCI states for LTM (e.g. TCI 65, TCI 66, TCI 67,..., TCI 128), which are identified by the TCI state ID having a value from 65-128 as an example of the second beam indicator. Similar as for the exemplary implementation of Example 2-1, for activating TCI states from the common list of configured TCI states, in Example 2-3 the UE receives separate activation information for the TCI states for BM and for the TCI states for LTM and accordingly generates a first subset of activated TCI states for BM (e.g. 8 "TCI" states in the upper list on the right side of Fig. 19) and independently generates a second subset of activated TCI states for LTM (e.g. 8 "candidate TCI" states in the lower list on the right side of Fig. 19).

In a preferable implementation of Example 2-3, similar as in the first implementation of Example 2-1 the activation information for activating the TCI states for BM is received by the UE in one or more first MAC CE messages, and the activation information for activating the TCI states for LTM is separately received by the UE in one or more second MAC CE messages. Again in a first implementation of Example 2-3, the exemplary MAC CE, which has been described with reference to Fig. 21 for the first implementation of Example 2-1 may be used for activating TCI states for BM and for activating TCI states for LTM. Because in Example 2-3 the TCI state ID is used as a common identifier for the TCI states for BM and for the TCI states for LTM, the processing circuit of the UE in the exemplary implementation of Example 2-3 distinguishes the TCI states for BM from the TCI states for LTM by the value of the TCI state ID. Hereby, if the value of the TCI state ID is in a first range, in the example of Fig. 19 indices 1-64, the respective TCI state is identified as a TCI state for BM, and if the value of the TCI state ID is in a second range, in the example of Fig. 19 indices 65-128, the respective TCI state is identified as a TCI state for LTM. Accordingly, due to the use of the shared TCI state ID space in Example 2-3, information on the type of TCI state is implicitly present in the fields "TCI state ID", which in the first exemplary implementation of Example 2-3 replace the fields"(Candidate) TCI state ID" of the MAC CE shown in Fig. 21. Therefore there is no need to have a 1-bit flag in the MAC CE to distinguish the type of TCI state and the "S" field of the MAC CE shown in Fig. 21 can be omitted in the first exemplary implementation of Example 2-3. Accordingly, the MAC CE used in the first implementation of Example 2-3 then substantially corresponds to the legacy MAC CE of Fig. 10, where only the field a field "Serving Cell ID" has been replaced by the field "Serving Cell or LTM Candidate Cell ID".

In an alternative implementation of Example 2-3, different types of MAC CEs may be used for activating TCI states for BM and for activating TCI states for LTM. For example, for activating TCI states for BM the existing MAC CE shown in Fig. 10 may be used, since in Example 2-3 the activation of TCI states for BM is independent from the newly introduced activation of TCI states for LTM. Then, for activating TCI states for LTM, for example, the same MAC CE as shown in Fig. 22 and described for the alternative implementation of Example 2-1 may be used.

By combining the separated beam indicator activation with the shared beam indicator configuration, Example 2-3 of the second solution has the advantage that beam indicator activation operations for BM and for LTM can be operated independently, so that e.g. the activated LTM related beam indicators can be released without impact on the activated beam indicators for BM in the serving cell and vice versa. Furthermore, due to the use of the shared beam indicator configuration, it is possible to reuse the legacy MAC CE for the beam indicator activation operation in Example 2-3.

### Example 2-4 - combined beam indicator activation for shared beam indicator ID spaces

**Fig. 20** shows an exemplary implementation of combining a joint beam indicator activation with a joint beam indicator configuration. As described for Example 1-2, in the exemplary implementation of Fig. 20 the UE has been configured with a common list of configured TCI states. The common list of configured TCI states contains the configured TCI states for BM (e.g. TCI 1, TCI 2, TCI 3..., TCI 64), which are identified by the TCI state ID having a value from 1-64 as an example of first beam indicators. In addition, the common list contains the configured TCI states for LTM (e.g. TCI 65, TCI 66, TCI 67,..., TCI 128), which are identified by the TCI state ID having a value from 65-128 as an example of the second beam indicator. Similar as for the exemplary implementation of Example 2-2, for activating TCI states from the common list of configured TCI states, the UE receives in Example 2-4 joint activation information for the TCI states for BM and for the TCI states for BM and accordingly generates a joint (or common) subset of activated TCI states for BM (e.g. 4 "TCI" states in the list of activated TCI states in Fig. 18) and of activated TCI states for LTM (e.g. 4 "candidate TCI" states in the list of activated TCI states in Fig. 18).

In the exemplary implementation of Example 2-4, the activation information for activating the TCI states for BM is received by the UE in one or more joint activation messages, which may specify both TCI states to be activated for BM and TCI states to be activated for LTM in a single activation message. For this purpose, in the exemplary implementation of Example 2-4, one MAC CE may be used to for transmitting the activation information, which allows the UE to generate the joint list of activated TCI states of Fig. 20. Again, in the exemplary implementation of Example 2-4, the exemplary MAC CE, which has been described with reference to Fig. 23 for the first implementation of Example 2-2 may be used for activating TCI states for BM and for activating TCI states for LTM.

Because in Example 2-4 the TCI state ID is used as a common identifier for the TCI states for BM and for the TCI states for LTM, the processing circuit of the UE in the exemplary implementation of Example 2-4 distinguishes the TCI states for BM from the TCI states for LTM by the value of the TCI state ID same as described for Example 2-3. Accordingly, due to the use of the shared TCI state ID space in Example 2-4, information on the type of TCI state is implicitly present in the fields "TCI state ID", which in the exemplary implementation of Example 2-4 replace the fields"(Candidate) TCI state ID" of the MAC CE shown in Fig. 23. Therefore, there is no need to have the 8-bit field in the MAC CE to indicate whether each of the activated TCI states is for BM or is for LTM, and the "Si" fields of the MAC CE shown in Fig. 23 can be omitted in the exemplary implementation of Example 2-4. Accordingly, the MAC CE used in the exemplary implementation of Example 2-4 substantially corresponds to the legacy MAC CE of Fig. 10, where only a field a field "Candidate Cell ID" has been added.

By combining the joint beam indicator activation with the shared beam indicator configuration, Example 2-4 of the second solution has the advantage that beam indicator activation operations for BM and for LTM can be unified. This makes it possible to reduce the control information overhead, since the beam indicators for BM and for LTM can be activated with a single MAC CE message. Further, the joint subset of activated beam indicators makes it possible to use a DCI indication as already defined for beam indicators for BM.

Until now, for the common list of configured TCI states of Examples 2-3 and 2-4 (and for Example 1-2) and for the joint subset of activated beam indicators of Examples 2-2 and 2-4, it has been assumed that a same amount of TCI states is supported for BM and for LTM, e.g. 64+64 configured TCI states and 4+4 activated TCI states. In other words, the range of configured first beam indicators and that of configured second beam indicators and the range of activated first beam indicators and of activated second beam indicators had been assumed to be the same. These numbers were however only given as examples. Alternatively, it could be also possible to split the number of TCI states for BM and the number of TCI states for LTM in accordance with the number of LTM candidate cells. For example, it could be possible to configure the number of preconfigured TCI states and/or the number of activated TCI states for LTM the higher, the higher the number of LTM candidate cell is and vice versa. The number of supported TCI states for BM (for configuration and activation) and/or the number of supported TCI states for LTM (for configuration and activation) could be a fixed value defined for all UEs that support LTM. Alternatively, one or both of these numbers could be configured semi-statically by the network, e.g. via Operation, Administration and Maintenance (OAM) functionality, or could be dynamically managed by inter-CU/DU signaling, which means that the gNB-CU could determine the split of the numbers and inform the connected gNB-DUs accordingly.

### Third solution - Beam indicator selection

As presented above, the third solution is directed towards providing an improved beam indicator selection operation, which introduces possibilities to select activated beam indicators for LTM already when the UE is still connected to the serving cell so that the UE can already prepare for using a beam, which can be used in a target candidate cell, before performing the cell switch from the serving cell to the target candidate cell.

Most favorable, the second solution provides beam indicator selection mechanisms for activated TCI states, which are activated in accordance with the different exemplary implementations of the improved beam indicator activation operation according to the second solution and in particular according to Examples 2-1 to 2-4 of the second solution. However, it should be also noted that the third solution can provide an independent improved beam indicator selection operation, even if one or more second beam indicator(s) are activated in a different manner than described for the second solution.

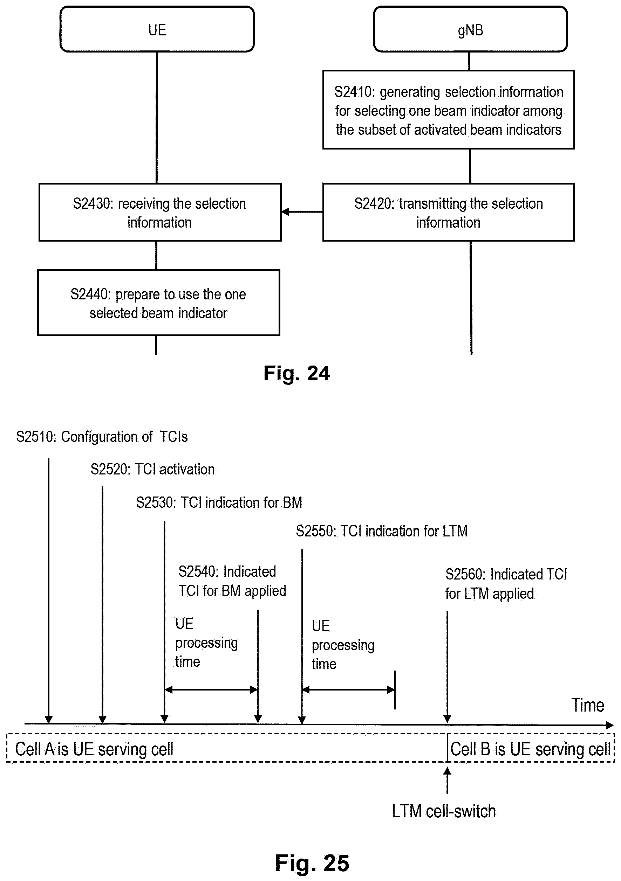

**Fig. 24** illustrates a simplified an exemplary sequence diagram for an exemplary UE behavior (left side) and an exemplary base station behavior (right side) according to the third solution of the improved beam indicating operation. As illustrated in Fig. 24, the beam indicator selection method performed by the base station comprises a step (S2410), which is performed by the processing circuit of the base station, of generating selection information for selecting one second beam indicator among the subset of activated (second) beam indicators. Hereby, the subset of beam indicators is preferably generated by the UE according to one of the exemplary implementations of the second solution, but this is not a necessary condition for performing the beam indicator selection method, as long as the activated subset or list of beam indicators includes at least one second beam indicator, which can be used by the UE for transmission or reception after a cell-switch. After generating the selection information, the beam indicator selection method performed by the base station comprises a step (S2420), which is performed by using the transceiver or transmitter of the base station, of transmitting the selection information to the UE.

The beam indicator selection method performed by a UE comprises a step (S2430), which is performed by the transceiver or receiver of the UE, of receiving the selection information for selecting one second beam indicator among the activated beam indicators. After receiving the selection information, the beam indicator selection method performed by the UE comprises a step (S2440), which is performed by the processing circuitry of the UE, of preparing to use the one selected second beam indicator indicated by the selection information for signal transmission and/or signal reception, after a cell-switch from the serving cell to the target candidate cell. Hereby, the preparation for using the one selected beam indicator includes, for example, that the processing circuitry adjusts settings of hardware components of the UE to be ready for using the beam indicated by the one selected beam indicator in the target candidate cell directly after the cell-switch. For example, the processing circuitry of the UE may tune the antennas of the UE or adjust the beam pattern to be used for the beam indicated by the one selected beam indicator.

The selection information for selecting one of the second beam indicators can be transmitted from the base station to the UE (i.e. received by the UE in step S2430) by a DCI, or in other words by including the selection information in a DCI message. For example, the DCI field "transmission configuration indication (TCI)", which had been described in the section Indication of TCI states (TCI Indication) before could be re-used, to indicate the one codepoint, to which the one selected beam indicator is mapped in the list of activated beam indicators.

When the UE implements a separated beam activation operation, like in Examples 2-1 and 2-3 of the second solution, and the UE has stored a first subset including only activated first beam indicators (e.g. TCI states for BM) and a second subset including only the activated second beam indicators (e.g. TCI states for LTM), the DCI message may for example include a 1-bit field, which indicates to which of the subsets (or lists) the selection information included in the DCI applies. For example, if the 1-bit field is set to "1", this could mean that the selection information included in the DCI is applied to the list of activated second beam indicators (e.g. TCI states for LTM), so that the selection information (e.g. in the DCI field "transmission configuration indication (TCI)") included in the DCI selects a codepoint from the list of the activated second beam indicators. Similar, if the 1-bit field is set "0" this could mean that the selection information included in the DCI is applied to the list of activated first beam indicators, so that the selection information (e.g. in the DCI field "transmission configuration indication (TCI)") included in the DCI selects a codepoint from the list of the activated first beam indicators.

Alternatively, it is also possible that a DCI (or DCI message), which includes the DCI field "transmission configuration indication (TCI)" is only used for selecting one of the first beam indicators (e.g. the TCI states for BM) in analogy to the description of the TCI state selection operation described for TCI states for BM in the section Indication of TCI states (TCI Indication) before. The selection information for selecting one of the second beam indicators can then be transmitted from the base station to the UE e.g. by using a MAC CE message, so that it does not become necessary to include a 1-bit field in the DCI message or to redefined the DCI fields for introducing the option to select an activated second beam indicator.

When the beam indicator activation operation uses a combined beam activation operation, like in Examples 2-2 and 2-4 of the second solution and the UE has stored a joint subset of beam indicators, which includes all the activated first beam indicators and all the activated second beam indicators, the DCI message may be same as described in the section Indication of TCI states (TCI Indication) before. However, if it becomes beneficial to introduce more than 8 activated TCI states, for example, to incorporate TCI states for LTM for a plurality of candidate cells and/or frequency bands, it could be possible to increase the number of bits allocated to the field DCI field "transmission configuration indication (TCI)".

**Fig. 25** illustrates a process diagram of an exemplary implementation of the improved beam selection process according to the third solution. In the example shown in Fig. 25, the UE is first served by a serving cell A, which means that the UE is connected to the gNB-DU, which supports cell A, and receives control information, like the configuration information, the activation information and the selection information described above, from the gNB-DU, which supports cell A. As long as the UE is served by cell A, the UE performs beam management in the serving cell A by using the beams indicated in TCI states for BM to signal transmission and signal reception, since TCI states for BM include TCI states for intra-cell beam management and inter-cell beam management.

Then as indicated by the arrow on the bottom of the timeline in Fig. 25, the UE receives cell-switch trigger information from the serving cell A, which indicates cell B as a target candidate cell for an LTM cell-switch and cell B becomes the new serving cell after the LTM cell-switch, which serves the UE. Accordingly, after the LTM cell-switch, the previous target candidate cell B is the new serving cell, which serves the UE, which means that after the LTM cell-switch the UE is connected to the gNB-DU, which supports cell B, and receives control information, like the configuration information, the activation information and the selection information described above, from the gNB-DU, which supports cell B. The gNB-DU, which supports cell B, may be the same or different from the gNB-DU, which supports cell A.

As illustrated in Fig. 25, the UE is configured in step S2510 by receiving RRC signaling with a set of beam indicators, which include TCI states for BM (in cell A), in particular intra-cell BM and inter-cell BM, and TCI states for LTM. The TCI state operation is preferably performed according to one of the exemplary implementations of the first solution. In step S2520, the UE receives one or more MAC CEs for activating at least one out of the TCI states for BM and one out of the TCI states for LTM and accordingly activates the respective TCI states. Next, the UE can receive selection information, which indicates to select one of the activated TCI states for BM (step S2530), and/or selection information, which indicates to select one of the activated TCI states for LTM (step S2550). If a TCI for BM is indicated, the UE applies the indicated TCI state, when the UE is in the current serving cell (step S2540). That means that the UE uses the beam indicated by the selected TCI state for BM for signal transmission and/or signal reception in a serving cell directly after lapse of a processing time, which is necessary for the UE for preparing its hardware to use the indicated beam.

If a TCI state for LTM is selected, the operation differs and the UE applies the indicated TCI state for LTM only after the UE switches to a target candidate cell associated with the selected TCI state for LTM (step S2560). In other words, the UE does not use the beam indicated by the selected TCI state for LTM for signal transmission and/or signal reception in a serving cell, even after the processing time for preparing the use of the beam has been lapsed, but uses the beam only after the cell-switch to the candidate cell associated with the selected TCI state for LTM. Consequently, a selected TCI state for LTM is only applied when the candidate cell, which is associated with the selected TCI state for LTM becomes the new serving cell after the LTM cell-switch, which means that the UE uses the beam indicated in the TCI state for LTM for signal transmission and/or signal reception only in the new serving cell (corresponding to the previous candidate target cell), but not before the LTM cell-switch.

Notably, in the exemplary illustration of Fig. 25, the selection information including the TCI indication for BM (S2530) is received by the UE (or transmitted by the base station) before the TCI the selection information including indication for LTM (S2550) in time. This should be understood as one example, but not as a restriction. Especially, the above description also applies to scenarios where the TCI indication for LTM is received (transmitted) earlier in time than the TCI indication for BM, or where the TCI indication is received (transmitted) at the same time as the TCI indication for BM. Further, the above description also applies to scenarios where multiple TCI indications for BM (S2530) (or multiple TCI indications for LTM) are received before the cell switch.

In a preferred implementation of the third solution, the transceiver of the UE receives cell-switch trigger information from the serving cell indicating one candidate cell out of a preconfigured set of candidate cells as a target of a cell-switch among a plurality of preconfigured candidate cells, and the processing circuitry of the UE controls the cell-switch from the serving cell to the target candidate cell in accordance with the cell-switch trigger information and the transceiver uses the selected one second beam indicator for a signal transmission and/or for a signal reception in the target candidate cell after the cell-switch.

Hereby, as a first option the selection information before the cell-switch trigger information, i.e. when the UE is still in the original serving cell. This allows to finish necessary processing (see the processing time in Fig. 25) for using the beam indicated in the selected second beam already while being in the original serving cell, so that the beam is ready to be used as soon as the cell switch is indicated, so that the latency of the L1/L2 triggered mobility procedure can be further reduced.

As a second option, the selection information could be received as a part of the cell-switch trigger information or as a third option, the selection information could be received after the cell-switch trigger information. While in these solutions, it is still required a delay caused by the processing time to prepare the beam for use, they still reduce the latency of finish necessary processing (see the processing time in Fig. 25), because the selected beam indicator was already activated in the original serving cell, so that the beam indicated by the selected beam indicator is already presynchronized.

### Fourth solution - Beam indication after the cell-switch

After the UE has performed an LTE cell switch, the target candidate cell becomes the new serving cell. Because the new serving cell may be supported by a different gNB-DU than the original cell, for which the first beam indictors (e.g. TCI states for BM) and the second beam indicators (e.g. TCI states for LTM) had been activated, it is unclear how to handle the previously activated beam indicators after the cell-switch. But, even if the original cell and the new serving cell are associated with the same gNB-DU, from the UE's perspective, it is still unclear how the UE should behave in terms of previously activated beam indicators. The fourth solution of the improved beam indication operation provides several examples, which provide different solutions for this problem.

### Example 4-1 - beam indicators are not retained

According to Example 4-1 of the fourth solution, after the LTM cell-switch has been performed, the processing circuit of the UE deactivates all the first beam indicators, and all the second beam indicators included in the subset of the activated beam indicators, except for the second beam indicator, which is currently used for the signal transmission and/or for the signal reception in the target candidate cell.

For example, the processing circuit of the UE deactivates all the activated TCI states for BM and the activated TCI states for LTM, which had been activated in the original serving cell before the cell-switch, except for the TCI state for LTM, which was selected before the cell-switch was performed and indicates the beam, which is used in the new serving cell (i.e. the previous target candidate cell) after the LTM cell-switch. In addition, the UE awaits the reception of new activation information for activating beam indicators for the new serving cell from the gNB-DU, which supports the new serving cell, for example transmitted in one or more MAC CE messages.

By releasing or deactivating all beam indicators except for the beam indicator, which indicates the currently used beam, the capability requirements for the UE can be reduced, since it is not required for the UE to track beam indicators, which had been activated in the old serving cell, still after the cell-switch.

### Example 4-2 - second beam indicators associated with the target cell are retained

According to Example 4-2 of the fourth solution, after the LTM cell-switch has been performed, the processing circuit of the UE deactivates all the first beam indicators, and all the second beam indicators included in the subset of the activated beam indicators, which can be used for the signal transmission and/or for the signal reception in another candidate cell different from the target candidate cell.

For example, the processing circuit of the UE deactivates all the activated TCI states for BM and the activated TCI states for LTM, which had been activated in the original serving cell before the cell-switch, except for the activated TCI states for LTM, which are associated with the new serving cell (i.e. the previous target candidate cell) after the LTM cell-switch. In other words, the processing circuit of the UE may only retain the activated TCI states for LTM, which are associated with the new serving cell, after the cell-switch, since these TCI states can be used for performing beam management, in particular intra-cell BM, in the new serving-cell. The retained activated TCI states can, for example, remain activated until the UE receives new activation information for activating beam indicators for the new serving cell from the gNB-DU, which supports the new serving cell, for example transmitted in one or more MAC CE messages.

In the solution of Example 4-2 the capability requirement for the UE is slightly increased compared to the solution of Example 4-1, but because the UE retains all the activated beam indicators associated with the new serving cell, the UE can perform beam management in the new serving cell, directly after the cell-switch without waiting for a new beam indicator activation. Accordingly, by implementing Example 4-2 the latency of the LTM operation is further reduced.

### Example 4-3 - second beam indicators not associated with the target cell are retained

According to Example 4-3 of the fourth solution, after the LTM cell-switch has been performed, the processing circuit of the UE deactivates all the first beam indicators, and all the second beam indicators included in the subset of the activated beam indicators, except for the second beam indicators, which is currently used for the signal transmission and/or for the signal reception in the target candidate cell and except for the second beam indicators, which are associated with candidate cells other than the target candidate cell.

For example, the processing circuit of the UE deactivates all the activated TCI states for BM and the activated TCI states for LTM, which are associated with the new serving cell, except for the TCI state for LTM, which was selected before the cell-switch was performed and indicates the beam, which is used in the new serving cell (i.e. the previous target candidate cell) after the LTM cell-switch. In other words, the processing circuit of the UE may only retain the activated TCI states for LTM, which are associated with candidate cells other than the new serving cell, after the cell-switch, since these TCI states can be used for performing a subsequent cell-switch form the new serving-cell to new candidate target cell. The retained activated TCI states can, for example, remain activated until the UE receives new activation information for activating beam indicators for the new serving cell from the gNB-DU, which supports the new serving cell, for example transmitted in one or more MAC CE messages.

In the solution of Example 4-3 the capability requirement for the UE may be slightly increased compared to the solution of Example 4-1, but because the UE retains all the activated beam indicators associated with candidate cells other than the new serving cell, the UE can be indicated with a beam indicator for a subsequent LTM cell-switch in the new serving cell, directly after the first cell-switch without waiting for a new beam indicator activation. Accordingly, by implementing Example 4-3 the latency of the LTM operation is further reduced.

### Example 4-4 - second beam indicators are retained

Example 4-4 provides a solution, which combines the advantages of the solutions of Example 4-2 and Example 4-3. In particular, according to Example 4-4, the processing circuit of the UE deactivates all the first beam indicators included in the subset of the activated beam indicators after the LTM cell-switch.

For example, the processing circuit of the UE deactivates all the activated TCI states for BM and retains all the activated TCI states for LTM. Since the processing circuit retains all the activated TCI states for LTM, it is possible to perform, directly after the cell-switch, beam management, in particular intra-cell BM, in the new serving-cell by using the TCI states for LTM associated with the new serving cell or a subsequent cell-switch form the new serving-cell to new candidate target cell by using the TCI states for LTM, which are associated with a candidate cell other than the target candidate cell, without waiting for a new TCI state activation. The retained activated TCI states can, for example, remain activated until the UE receives new activation information for activating beam indicators for the new serving cell from the gNB-DU, which supports the new serving cell, for example transmitted in one or more MAC CE messages.

In the solution of Example 4-4 the capability requirement for the UE may be slightly increased compared to the solutions of Example 4-1, 4-2 and 4-3, but because the UE retains all the activated beam indicators for LTM, UE can perform beam management in the new serving cell and/or can be indicated with a beam indicator for a subsequent LTM cell-switch in the new serving cell, directly after the first cell-switch without waiting for a new beam indicator activation. Accordingly, by implementing Example 4-4 the latency of the LTM operation is further reduced.

### Example 4-5 - first beam indicators are retained

Example 4-5 provides a solution, which can not only be implemented as an alternative to the solutions described in Examples 4-1 to 4-4, but also can be implemented in combination with one of the solutions described in Examples 4-1 to 4-4.

According to Example 4-5, the processing circuit of the UE retains the first beam indicators in the included in the subset of the activated beam indicators. As a further option, the at least one first beam indicator retained can be selected for signal transmission to the serving cell and/or for signal reception from the serving cell, which becomes a candidate for participating in mobility for the UE after the LTM cell-switch.

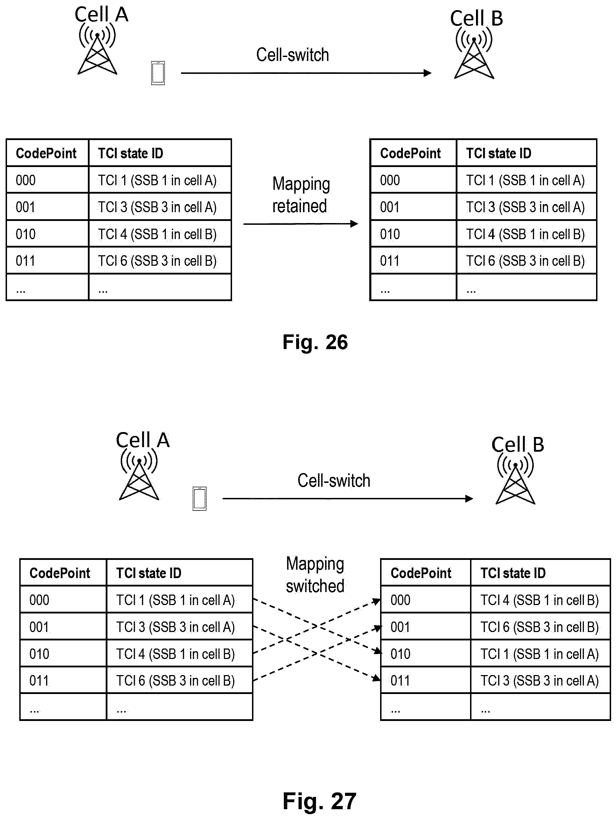

For example, the processing circuit of the UE, after the LTM cell-switch, retains all the TCI states for BM, which means BM in the original serving cell. However, as exemplarily shown in **Fig. 26** and **Fig. 27****,** the TCI for BM as configured and activated by the original serving cell may include TCI states for intra-cell BM, e.g. in cell A TCI states TCI 1 and TCI 3, which have source reference signals in cell A, and TCI states for inter-cell BM, e.g. in cell A TCI states TCI 4 and TCI 6, which have source reference signals in cell B. Now, after an LTM cell-switch from cell A to cell B, as soon as cell B becomes the new serving cell, the TCI states for intra-cell BM of cell A become TCI states for inter-cell BM in cell B, because these states have source reference signals in cell A, like TCI states TCI 1 and TCI 3 in Fig. 26 and Fig. 27. Similar, after an LTM cell-switch from cell A to cell B, as soon as cell B becomes the new serving cell, the TCI states for inter-cell BM of cell A, which have source reference signals in cell B become TCI states for intra-cell BM in cell B. Same as for Examples 4-1 to 4-4, after the LTM cell-switch the retained activated TCI state for BM can, for example, remain activated until the UE receives new activation information for activating beam indicators for the new serving cell from the gNB-DU, which supports the new serving cell, for example transmitted in one or more MAC CE messages.

Accordingly, Example 4-5 allows for continuing to use the first beam indicators for performing inter-cell BM and intra-cell BM directly after the LTM cell-switch without waiting for a new beam indicator activation.

In a first optional implementation of Example 4-5, an association between each of the activated beam indicators with a codepoint for selecting the respective first beam indicator is maintained after the cell-switch. This is for example illustrated in Fig. 26, where the mapping of the activated TCI state for BM to one specific codepoint is not changed, while the type of TCI state for BM is swapped between intra-cell BM and inter-cell BM and vice versa as explained above. Accordingly, in this example cells A the TCI states for intra-cell BM are mapped to codepoints 000 and 001, while the TCI states for inter-cell BM are mapped to codepoints 010 and 011, while after the LTM cell switch in cell B the TCI states for intra-cell BM are mapped to codepoints 010 and 011, while the TCI states for inter-cell BM are mapped to codepoints 000 and 001. This has the advantage that no further processing effort has to be provided by the UE after the LTM cell-switch.

In a second optional implementation of Example 4-5, an association between each of the activated beam indicators with a codepoint for selecting the respective beam indicator is changed after the cell-switch. This is for example illustrated in Fig. 27, where the mapping of the activated TCI state for BM to one specific codepoint is changed according to their type of TCI state for BM in the new serving cell B. Accordingly, in this example in both cells A and B the TCI states for intra-cell BM are mapped to codepoints 000 and 001 and the TCI states for inter-cell BM are mapped to codepoints 010 and 011. This has the advantage that the order of the intra- and inter- types of TCI states can be maintained after performing the LTM cell-switch.

The Examples 4-1 - 4-5 of the fourth solution have been described so far. It should be therefore noted, that for each of the Examples 4-2, 4-3, 4-4 and 4-5 for a case where a target gNB-DU supporting the new serving cell after the LTM cell-switch is not identical to a source gNB-DU supporting the original serving cell, the source gNB-DU, which had configured the activated TCI states of the UE before the LTM cell-switch, should notify the target gNB-DU, which of the activated TCI states are retained by the UE after the LTM cell switch. Since there is no direct interface defined between the source gNB-DU and the target gNB-DU in 5G NR, the source gNB-DU should communicate this information to the target gNB-DU via the gNB-CUs, to which both gNB-DUs are connected (see e.g. Fig. 6 for the split-gNB architecture).

Whether to support a specific one of the Examples 4-1 - 4-5 or a combination of these Examples can be made dependent on the UE capability. For example, before performing an LTM operation, the UE could generate a capability report, which includes information on its capability for supporting of retaining the activated beam indicators after an LTM cell switch. The UE may transmit the capability report to the network (e.g. the serving gNB-CU or the serving gNB-DU) and the network could then follow the pattern that the UE reports. In cases where the UE reports support of various multiple combinations of the Examples 4-1 - 4-5, the network should choose a pattern, which allows for the highest number of retained TCI states that is reported by the UE to be supported after the LTM cell-switch. Alternatively, there could be one defined pattern of retained TCI states, according to one of the Examples 4-1 - 4-5 or according to a combination thereof, which needs to be applied by all UEs, which support LTM.

### Further Aspects

According to a first aspect, there is provided a user equipment, UE, comprising the following. A transceiver receives configuration information for configuring a set of beam indicators, wherein the set of beam indicators includes at least one first beam indicator and at least one second beam indicator, wherein the at least one first beam indicator indicates one or more beams, which can be used for signal transmission and/or signal reception in a serving cell, which is serving the UE, and wherein the at least one second beam indicator indicates one or more candidate beams, which can be used for signal transmission and/or a signal reception after a cell-switch from the serving cell to a target candidate cell, which is one out of one or more candidates for participating in mobility for the UE. A processing circuitry of the UE configures the set of beam indicators obtained from the configuration information.

According to a second aspect provided in addition to the first aspect, the at least one first beam indicator is separately configured from the at least one second beam indicator. In an optional implementation of the second aspect, the at least one first beam indicator and the at least one second beam indicator are identified by different identifiers, and/or the processing circuitry configures a first list listing the at least one first beam indicator included in the set of beam indicators, and separately configures a second list listing the at least one second beam indicator included in the set of beam indicators.

According to a third aspect provided in addition to the first aspect, the at least one first beam indicator and the at least one second beam indicator are jointly configured. In an optional implementation of the third aspect, the at least one first beam indicator is identified by being indicated with an index in a first range of values, and the at least one second beam indicator is identified by being indicated with an index in a second range of values, and/or the processing circuitry configures a common list for storing the at least one first beam indicator and the at least one second beam indicator included in the set of beam indicators.

According to a fourth aspect provided in addition to one of the first to third aspects, the transceiver receives activation information for activating one or more beam indicators out of the configured set of beam indicators, wherein the one or more beam indicators include at least one second beam indicator to be activated. The processing circuitry generates a subset of activated beam indicators including the one or more beam indicators indicated in the activation information, and prepares the beams and the candidate beams indicated by the activated beam indicators to be selected for signal transmission and/or signal reception. In an optional implementation of the fourth aspect, the activation information is received in one or more medium access control, MAC, control element, CE, messages, and/or in case the one or more beam indicators include in addition at least one first beam indicators to be activated, the activation information is received in a first activation message specifying the at least one first beam indicator to be activated, and a second activation message, separate from the first activation message, specifying the at least one second beam indicator to be activated, and/or in case the one or more beam indicators include in addition at least one first beam indicator to be activated, the activation information is received in a single activation message, which specifies the at least one first beam indicator to be activated and the at least one second beam indicator to be activated.

According to a fifth aspect provided in addition to the fourth aspect, the processing circuitry generates a first subset of beam indicators, which includes all the activated first beam indicators and separately generates a second subset of beam indicators, which includes all the activated second beam indicators. In an optional implementation of the fifth aspect, the processing circuitry associates each of the activated first beam indicators included in the first subset with a codepoint for selecting the respective first beam indicator and separately associates each of the activated second beam indicators included in the second subset with a codepoint for selecting the respective second beam indicator.

According to a sixth aspect provided in addition to the fourth aspect, the processing circuitry, in operation generates a joint subset of beam indicators, which includes all the activated first beam indicators and all the activated second beam indicators. In an optional implementation of the sixth aspect, the processing circuitry associates each of the activated beam indicators included in the joint subset with a codepoint for selecting the respective beam indicators.

According to a seventh aspect provided in addition to one of the fourth to sixth aspects, the transceiver receives selection information for selecting one second beam indicator among the activated beam indicators. The processing circuitry prepares to use the one selected second beam indicator indicated by the selection information for signal transmission and/or signal reception, after a cell-switch from the serving cell to the target candidate cell. In an optional implementation of the seventh aspect, the selection information is received in a downlink control information, DCI, message, or the selection information is received in one or more medium access control, MAC, control element, CE, messages.

According to an eighth aspect provided in addition to the seventh aspect, the transceiver receives cell-switch trigger information from the serving cell indicating one candidate cell out of a preconfigured set of candidate cells as a target of a cell-switch among a plurality of preconfigured candidate cells. The processing circuitry controls the cell-switch from the serving cell to the target candidate cell in accordance with the cell-switch trigger information. The transceiver uses the selected one second beam indicator for a signal transmission and/or for a signal reception in the target candidate cell. In an optional implementation of the eight aspect, the transceiver receives the selection information before the cell-switch trigger information, or the transceiver receives the selection information as a part of the cell-switch trigger information, or the transceiver receives the selection information after the cell-switch trigger information.

According to a ninth aspect provided in addition to one of the fourth to eighth aspects, the processing circuitry, after a cell-switch from the serving cell to a target candidate cell, deactivates all the second beam indicators included in the subset of the activated beam indicators, which can be used for signal transmission and/or signal reception in another candidate cell different from the target candidate cell. Alternatively or in addition to the ninth aspect, the processing circuitry, after a cell-switch from the serving cell to the target candidate cell, deactivates all the second beam indicators included in the subset of the activated beam indicators, which can be used for signal transmission and/or signal reception in the target candidate cell, except for the second beam indicator, which is currently used for the signal transmission and/or for the signal reception in the target candidate cell.

According to a tenth aspect provided in addition to one of the fourth to ninth aspects, the processing circuitry, after a cell-switch from the serving cell to a target candidate cell, deactivates all the first beam indicators included in the subset of the activated beam indicators.

According to an eleventh aspect provided in addition to one of the fourth to ninth aspects, after a cell-switch from the serving cell to the target candidate cell, the at least one second beam indicator included in the subset of the activated beam indicators can be selected for signal transmission and/or signal reception in the target candidate cell, which serves the UE after the cell-switch. Alternatively or in addition to the eleventh aspect, in case that at least one of the first beam indicators is included in the subset of the activated beam indicators, after a cell-switch from the serving cell to the target candidate cell, the at least one first beam indicator included in the subset of the activated beam indicators can be selected for signal transmission to the serving cell and/or for signal reception from the serving cell, which becomes a candidate for participating in mobility for the UE after the cell-switch.

In an optional implementation of the eleventh aspect, an association between each of the activated beam indicators with a codepoint for selecting the respective first beam indicator is maintained after the cell-switch. In an alternative optional implementation of the eleventh aspect, an association between each of the activated beam indicators with a codepoint for selecting the respective beam indicator is changed after the cell-switch.

According to a twelfth aspect provided in addition to one of the first to eleventh aspects each beam indicator is a transmission configuration indication, TCI, state identifier, a synchronization signal block identifier, SSB ID, and/or a reference signal resource identifier, RS ID.

According to a thirteenth aspect, a base station is provided comprising the following. A Processing circuitry of the base station generates configuration information for configuring a set of beam indicators, wherein the set of beam indicators includes at least one first beam indicator and at least one second beam indicator, wherein the at least one first beam indicator indicates one or more beams, which can be used for signal transmission and/or signal reception in a serving cell, which is serving a UE, and wherein the at least one second beam indicator indicates one or more candidate beams, which can be used for signal transmission and/or a signal reception after a cell-switch from the serving cell to a target candidate cell, which is one out of one or more candidates for participating in mobility for the UE. A transmitter of the base station transmits the configuration information.

According to a fourteenth aspect, a method is provided comprising the following steps performed by a user equipment, UE:
receiving configuration information for configuring a set of beam indicators,
wherein the set of beam indicators includes at least one first beam indicator and at least one second beam indicator,
wherein the at least one first beam indicator indicates one or more beams, which can be used for signal transmission and/or signal reception in a serving cell, which is serving the UE, and
wherein the at least one second beam indicator indicates one or more candidate beams, which can be used for signal transmission and/or a signal reception after a cell-switch from the serving cell to a target candidate cell, which is one out of one or more candidates for participating in mobility for the UE; and
configuring the set of beam indicators obtained from the configuration information.

According to a fifteenth aspect, an integrated circuit is provided (that may be deployed in a communication system, in particular a user equipment, UE). The integrated circuit, in operation, controls a process of a communication device, the process including the steps of the method according to the fourteenth aspect.

According to a sixteenth aspect, a method is provided comprising the following steps performed by a base station, BS:
generating configuration information for configuring a set of beam indicators,
wherein the set of beam indicators includes at least one first beam indicator and at least one second beam indicator,
wherein the at least one first beam indicator indicates one or more beams, which can be used for signal transmission and/or signal reception in a serving cell, which is serving a UE, and
wherein the at least one second beam indicator indicates one or more candidate beams, which can be used for signal transmission and/or a signal reception after a cell-switch from the serving cell to a target candidate cell, which is one out of one or more candidates for participating in mobility for the UE; and
transmitting the configuration information.

According to a seventeenth aspect, an integrated circuit is provided (that may be deployed in a communication system, in particular a base station). The integrated circuit, in operation, controls a process of a communication device, the process including the steps of the method according to the sixteenth aspect.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a transceiver, which in operation:
receives configuration information for configuring a set of beam indicators,
wherein the set of beam indicators includes at least one first beam indicator and at least one second beam indicator,
wherein the at least one first beam indicator indicates one or more beams, which can be used for signal transmission and/or signal reception in a serving cell, which is serving the UE, and
wherein the at least one second beam indicator indicates one or more candidate beams, which can be used for signal transmission and/or a signal reception after a cell-switch from the serving cell to a target candidate cell, which is one out of one or more candidates for participating in mobility for the UE; and
processing circuitry, which in operation:
configures the set of beam indicators obtained from the configuration information.

2. The UE according to claim 1, wherein the at least one first beam indicator is separately configured from the at least one second beam indicator,
optionally, wherein the at least one first beam indicator and the at least one second beam indicator are identified by different identifiers; and/or
optionally, wherein the processing circuitry, in operation, configures a first list listing the at least one first beam indicator included in the set of beam indicators, and separately configures a second list listing the at least one second beam indicator included in the set of beam indicators.

3. The UE according to claim 1, wherein the at least one first beam indicator and the at least one second beam indicator are jointly configured,
optionally, wherein the at least one first beam indicator is identified by being indicated with an index in a first range of values, and the at least one second beam indicator is identified by being indicated with an index in a second range of values; and/or
optionally, wherein the processing circuitry, in operation, configures a common list for storing the at least one first beam indicator and the at least one second beam indicator included in the set of beam indicators.

4. The UE according to one of claims 1 to 3, wherein the transceiver, in operation:
receives activation information for activating one or more beam indicators out of the configured set of beam indicators, wherein the one or more beam indicators include at least one second beam indicator to be activated; and
the processing circuitry, in operation:
generates a subset of activated beam indicators including the one or more beam indicators indicated in the activation information; and
prepares the beams and the candidate beams indicated by the activated beam indicators to be selected for signal transmission and/or signal reception;
optionally, wherein the activation information is received in one or more medium access control, MAC, control element, CE, messages;
optionally, wherein, in case the one or more beam indicators include in addition at least one first beam indicators to be activated, the activation information is received in a first activation message specifying the at least one first beam indicator to be activated, and a second activation message, separate from the first activation message, specifying the at least one second beam indicator to be activated; and/or
optionally, wherein in case the one or more beam indicators include in addition at least one first beam indicator to be activated, the activation information is received in a single activation message, which specifies the at least one first beam indicator to be activated and the at least one second beam indicator to be activated.

5. The UE according to claim 4, wherein the processing circuitry, in operation
generates a first subset of beam indicators, which includes all the activated first beam indicators and separately generates a second subset of beam indicators, which includes all the activated second beam indicators,
optionally, wherein the processing circuitry, in operation, associates each of the activated first beam indicators included in the first subset with a codepoint for selecting the respective first beam indicator and separately associates each of the activated second beam indicators included in the second subset with a codepoint for selecting the respective second beam indicator.

6. The UE according to claim 4, wherein the processing circuitry, in operation generates a joint subset of beam indicators, which includes all the activated first beam indicators and all the activated second beam indicators,
optionally, wherein the processing circuitry, in operation, associates each of the activated beam indicators included in the joint subset with a codepoint for selecting the respective beam indicators.

7. The UE according to one of claims 4 to 6, wherein the transceiver, in operation:
receives selection information for selecting one second beam indicator among the activated beam indicators; and
the processing circuitry, in operation:
prepares to use the one selected second beam indicator indicated by the selection information for signal transmission and/or signal reception, after a cell-switch from the serving cell to the target candidate cell,
optionally, wherein the selection information is received in a downlink control information, DCI, message; or
optionally, wherein the selection information is received in one or more medium access control, MAC, control element, CE, messages.

8. The UE according to claim 7, wherein the transceiver, in operation receives cell-switch trigger information from the serving cell indicating one candidate cell out of a preconfigured set of candidate cells as a target of a cell-switch among a plurality of preconfigured candidate cells, and
wherein the processing circuitry, in operation controls the cell-switch from the serving cell to the target candidate cell in accordance with the cell-switch trigger information; and
wherein the transceiver uses the selected one second beam indicator for a signal transmission and/or for a signal reception in the target candidate cell;
optionally, wherein the transceiver, in operation, receives the selection information before the cell-switch trigger information;
wherein the transceiver, in operation, receives the selection information as a part of the cell-switch trigger information; or
wherein the transceiver, in operation, receives the selection information after the cell-switch trigger information.

9. The UE according to one of claims 4 to 8, wherein the processing circuitry in operation, after a cell-switch from the serving cell to a target candidate cell, deactivates all the second beam indicators included in the subset of the activated beam indicators, which can be used for signal transmission and/or signal reception in another candidate cell different from the target candidate cell, and/or
wherein the processing circuitry in operation, after a cell-switch from the serving cell to the target candidate cell, deactivates all the second beam indicators included in the subset of the activated beam indicators, which can be used for signal transmission and/or signal reception in the target candidate cell, except for the second beam indicator, which is currently used for the signal transmission and/or for the signal reception in the target candidate cell.

10. The UE according to one of claims 4 to 9, wherein the processing circuitry, in operation, after a cell-switch from the serving cell to a target candidate cell, deactivates all the first beam indicators included in the subset of the activated beam indicators.

11. The UE according to one of claims 4 to 9, wherein, after a cell-switch from the serving cell to the target candidate cell, the at least one second beam indicator included in the subset of the activated beam indicators can be selected for signal transmission and/or signal reception in the target candidate cell, which serves the UE after the cell-switch, and/or
in case that at least one of the first beam indicators is included in the subset of the activated beam indicators, after a cell-switch from the serving cell to the target candidate cell, the at least one first beam indicator included in the subset of the activated beam indicators can be selected for signal transmission to the serving cell and/or for signal reception from the serving cell, which becomes a candidate for participating in mobility for the UE after the cell-switch;
optionally, wherein an association between each of the activated beam indicators with a codepoint for selecting the respective first beam indicator is maintained after the cell-switch, or
optionally, wherein an association between each of the activated beam indicators with a codepoint for selecting the respective beam indicator is changed after the cell-switch.

12. The UE according to one of claims 1 to 11, wherein each beam indicator is a transmission configuration indication, TCI, state identifier, a synchronization signal block identifier, SSB ID, and/or a reference signal resource identifier, RS ID.

13. A base station comprising:
processing circuitry, which in operation:
generates configuration information for configuring a set of beam indicators,
wherein the set of beam indicators includes at least one first beam indicator and at least one second beam indicator,
wherein the at least one first beam indicator indicates one or more beams, which can be used for signal transmission and/or signal reception in a serving cell, which is serving a UE, and
wherein the at least one second beam indicator indicates one or more candidate beams, which can be used for signal transmission and/or a signal reception after a cell-switch from the serving cell to a target candidate cell, which is one out of one or more candidates for participating in mobility for the UE; and
a transmitter, which in operation:
transmits the configuration information.

14. A method comprising the following steps performed by a user equipment, UE:
receiving configuration information for configuring a set of beam indicators,
wherein the set of beam indicators includes at least one first beam indicator and at least one second beam indicator,
wherein the at least one first beam indicator indicates one or more beams, which can be used for signal transmission and/or signal reception in a serving cell, which is serving the UE, and
wherein the at least one second beam indicator indicates one or more candidate beams, which can be used for signal transmission and/or a signal reception after a cell-switch from the serving cell to a target candidate cell, which is one out of one or more candidates for participating in mobility for the UE; and
configuring the set of beam indicators obtained from the configuration information.

15. A method comprising the following steps performed by a base station, BS:
generating configuration information for configuring a set of beam indicators,
wherein the set of beam indicators includes at least one first beam indicator and at least one second beam indicator,
wherein the at least one first beam indicator indicates one or more beams, which can be used for signal transmission and/or signal reception in a serving cell, which is serving a UE, and
wherein the at least one second beam indicator indicates one or more candidate beams, which can be used for signal transmission and/or a signal reception after a cell-switch from the serving cell to a target candidate cell, which is one out of one or more candidates for participating in mobility for the UE; and
transmitting the configuration information.
